# FASCICULE DE BREVET EUROPEEN

(11) **EP 3 203 694 B1**
(45) Date de publication et mention de la délivrance du brevet: **16.05.2018**
(21) Numéro de dépôt: 17153881.2
(22) Date de dépôt: 31.01.2017
(51) Int. Cl.: H04L 12/723, H04N 21/00, H04B 7/185

(54) **PROCEDE BORD DE ROUTAGE TRANSPARENT DE PAQUETS DE DONNEES A TRES HAUT DEBIT DANS UN SYSTEME DE TELECOMMUNICATIONS SPATIAL UTILISANT UN RESEAU D'AU MOINS UN SATELLITE(S) REGENERATIF(S)**
BORDVERFAHREN MIT TRANSPARENTEM NACHRICHTENROUTING VON DATENPAKETEN MIT SEHR HOHEM DURCHSATZ IN EINEM RÄUMLICHEN TELEKOMMUNIKATIONSSYSTEM, DAS EIN NETZ MIT MINDESTENS EINEM ODER MEHREREN REGENERATIVEN SATELLITEN NUTZT
ON-BOARD METHOD FOR TRANSPARENT ROUTING OF DATA PACKETS WITH VERY HIGH THROUGHPUT IN A SPATIAL TELECOMMUNICATION SYSTEM USING A NETWORK OF AT LEAST ONE REGENERATIVE SATELLITE

(30) Priorité: 05.02.2016 FR 1600195
(43) Date de publication de la demande: 09.08.2017
(73) Titulaire: Thales, 92400 Courbevoie (FR)
(72) Inventeur: BAUDOIN, Cédric, 31100 Toulouse (FR); CHUBERRE, Nicolas, 31100 Toulouse (FR); GAYRARD, Jean-Didier, 31100 Toulouse (FR)
(74) Mandataire: Tanguy, Yannick

(56) Documents cités:
- US-A1- 2016 037 434
- "Digital Video Broadcasting (DVB); Generic Stream Encapsulation (GSE); Part 1: Protocol", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. BROADCAS, no. V1.2.1, 1 juillet 2014 (2014-07-01), XP014214603,
- "Digital Video Broadcasting (DVB); Generic Stream Encapsulation (GSE) implementation guidelines", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. BROADCAS, no. V1.2.1, 1 mai 2011 (2011-05-01), XP014064621,
- "Digital Video Broadcasting (DVB); Second generation framing structure, channel coding and modulation systems for Broadcasting, Interactive Services, News Gathering and other broadband satellite applications; Part 1: DVB-S2", EUROPEAN STANDARD, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. BROADCAS, no. V1.4.1, 1 novembre 2014 (2014-11-01), XP014235773,

## Description

La présente invention concerne un procédé bord de routage transparent de paquets de données à très haut débit mis en oeuvre dans un système de télécommunications spatial utilisant un réseau de satellites régénératifs, dotés de liaisons inter-satellites ISL (en anglais « Inter-satellite Links ») ou au moins un satellite géostationnaire régénératif.

La présente invention concerne également un système de télécommunications spatiales par satellite(s) à débit élevé, configuré pour mettre en oeuvre ledit procédé de routage transparent de paquets.

Le domaine technique de l'invention concerne en particulier les constellations de satellites, par exemple celle du système LEOSAT, destinées à fournir des services d'acheminement / d'amenée de flux de données (en anglais « trunking / backhauling ») à très haut débit, c'est-à-dire des services de débit supérieur à 50 Mbps par terminal au sol, avec des liaisons inter-satellites ISL (en anglais « Inter Satellites Link ») pour définir un réseau patrimonial dans l'espace sans infrastructure sol.

A ce jour, des solutions de trois types de commutation bord sont mises en oeuvre dans les satellites pour commuter des paquets de données de petite taille à des débits relativement faibles

Les solutions d'un premier type utilisent les protocoles ATM (en anglais « Asynchronous Transfert Mode ») ou MPEG2-TS (en anglais « Moving Pictures Experts Group - Transport Stream ») qui permettent une commutation efficace des paquets considérés en raison de leur faible taille et de leur taille fixe. En revanche, ce type de commutation conduit à un nombre extrêmement élevé de paquets de données à traiter, incompatible des contraintes de puissance de traitements imposées par les processeurs bord, embarqués à bord des satellites, si l'on considère ces débits extrêmement élevés. De plus, ces formats de paquets ou ces structures de trame impliquent un entête (en anglais « overhead ») de taille importante diminuant d'autant le débit utile disponible.

Les solutions d'un deuxième type sont fondées sur le protocole générique d'encapsulation de flux de données GSE (en anglais « Generic Stream Encapsulation Protocol ») tel que défini dans la norme technique ETSI (en anglais « European Telecommunications Standard Institute ») de référence ETSI TS 102 606 V1.1.1 (2007-10) et intitulée « Digital Video Broadcasting (DVB) ; Generic Stream Encapsulation (GSE) Protocol ». Ces solutions de deuxième type permettent de limiter un peu le nombre de paquets à traiter, bien que ce nombre reste encore très important. En outre, la taille variable de ces paquets requiert de gérer les problématiques de segmentation et de concaténation, ce qui limite les gains en termes de diminution de la complexité des traitements Le standard DVB-S2 est connu du document "Digital Video Broadcasting (DVB); Second generation framing structure, channel coding and modulation systems for Broadcasting, Interactive Services, News Gathering and other broadband satellite applications; Part 1: DVB-S2",EUROPEAN STANDARD, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. BROADCAS, no. V1.4.1, 1 novembre 2014 (2014-11-01), XP014235773. Les solutions d'un troisième type sont fondées quant à elles sur le protocole Internet (en anglais « Internet Protocol ») et sont bien adaptées au trafic internet, mais elles impliquent également un nombre important de paquets de taille variable à traiter en cas de liaison haut débit. En outre, travailler au niveau IP nécessite de mettre en oeuvre du réassemblage bord, ce qui conduit à une augmentation notable des mémoires tampon bord (en anglais « buffers ») et de la puissance de calcul à bord nécessaire.

Dans le cas de systèmes spatiaux très capacitif, c'est-à-dire ayant une capacité de transmission supérieure à 10 Gbps (Gigabits par seconde), les solutions décrites ci-dessus nécessitent une complexité bord très élevée, qui croit linéairement avec le nombre de paquets de données à traiter.

Le problème technique est de réduire de manière significative les traitements bord des satellites pour la commutation et le routage de paquets de données à très haut débit transitant via un réseau de satellites régénératifs, dotés de liaisons inter-satellites ISL ou via un satellite géostationnaire régénératif doté d'un routeur interne.

A cet effet, l'invention a pour objet un procédé de routage bord transparent de paquets de données à débit élevé, mis en oeuvre par un système de télécommunications par satellites. Le système de télécommunications par satellite(s) comprend :
- une station émettrice de départ, une première station réceptrice de destination, une deuxième station réceptrice de destination, et une pluralité d'au moins un satellite(s);
- une première liaison radioélectrique montante qui connecte la station émettrice de départ à un premier satellite de la pluralité, configuré comme un satellite de départ vis-à-vis de la station émettrice de départ;
- une deuxième liaison radioélectrique descendante qui connecte, dans une première configuration, la première station réceptrice de destination à un deuxième satellite de la pluralité, configuré comme un premier satellite de destination vis-à-vis de la première station réceptrice de destination, ou qui connecte, dans une deuxième configuration et une troisième configuration, la première station réceptrice de destination au premier satellite, configuré comme un premier satellite de destination vis-à-vis de la première station réceptrice de destination;
- une troisième liaison descendante radioélectrique qui connecte, dans la première configuration, la deuxième station réceptrice de destination à un troisième satellite de la pluralité, configuré comme un deuxième satellite de destination vis-à-vis de la deuxième station réceptrice de destination, ou qui connecte, dans la deuxième configuration, la deuxième station réceptrice de destination à un deuxième satellite de la pluralité, configuré comme un deuxième satellite de destination vis-à-vis de la deuxième station réceptrice de destination, ou qui connecte dans la troisième configuration, la deuxième station réceptrice de destination au premier satellite, configuré comme un deuxième satellite de destination vis-à-vis de la deuxième station réceptrice de destination. Les premier, deuxième et troisième satellites de la première configuration, ou les premier et deuxième satellites de la deuxième configuration sont interconnectés entre eux par un réseau spatial comportant au moins deux ou au moins une liaison(s) inter-satellites, et le premier satellite de la troisième configuration comporte un routeur interne. Le procédé de routage bord transparent est caractérisé en que :
- la station émettrice de départ segmente des flux de données à haut débit reçu en des paquets BBFRAME codés ou non codés ayant chacun la structure d'une trame de bande de base BBFRAME codée ou non codée telle que définie par le protocole DVB-S2 ; et
- la station émettrice de départ insère pour chaque paquet BBFRAME, codé ou non codé, une étiquette de routage bord d'un seul tenant respectivement associée audit paquet BBFRAME codé ou non codé, en incluant l'étiquette de routage bord à l'intérieur et en début d'un champ de données de charge utile dudit paquet BBFRAME lorsque le paquet BBFRAME est non codé, ou en ajoutant de manière externe l'étiquette de routage bord audit paquet BBFRAME lorsque paquet BBFRAME est codé. L'étiquette de routage bord associée audit paquet BBFRAME codée ou non codée contient un identifiant de la station réceptrice de destination associée audit paquet BBFRAME codé, comprise parmi la première station réceptrice de destination et la deuxième station réceptrice de destination (8 ; 58 ; 108).

Suivant des modes particuliers de réalisation, le procédé de routage bord transparent de paquets de données comprend l'une ou plusieurs des caractéristiques suivantes :
- le procédé de routage bord transparent comprend les étapes consistant en ce que :
   - dans une première étape, la station émettrice de départ segmente des flux de données à haut débit reçu en des paquets BBFRAME non codés de grande taille ayant chacun la structure d'une trame de bande de base BBFRAME non codée telle que définie par le protocole DVB-S2 et dans laquelle un champ de données est réservé en tête et au sein de la charge utile du paquet BBFRAME non codé pour recevoir une étiquette de routage bord d'un seul tenant associé, contenant un identifiant de la station réceptrice de destination associée audit paquet BBFRAME non codé ; puis
   - dans une deuxième étape, la station émettrice de départ insère dans l'étiquette de routage un identifiant de la station réceptrice de destination associée audit paquet BBFRAME non codé, code le paquet BBFRAME non codé complété en un paquet BBFRAME codé, et émet le paquet BBFRAME codé vers le premier satellite, configuré comme satellite de départ, le paquet BBFRAME codé émis étant modulé par une modulation prédéterminée, définie selon le protocole DVB-S2 et compatible du code utilisé pour le paquet DVB-S2 ; ensuite
   - dans une troisième étape, le premier satellite de départ reçoit, démodule et décode chaque paquet BBFRAME codé, émis par la station émettrice de départ dans la deuxième étape, et extrait de l'étiquette de routage bord l'information d'identification de la station réceptrice de destination pour router, de manière transparente à l'aide du réseau spatial le paquet BBFRAME décodé vers le satellite de destination correspondant à la station réceptrice de destination du paquet BBFRAME non codé ;
- la première étape comprend une quatrième étape et une cinquième étape exécutées successivement, la quatrième étape consistant en ce que la station émettrice de départ segmente des flux de données à haut débit reçu en des paquets BBFRAME non codés ayant chacun la structure d'une trame de bande de base avant codage telle que définie dans le protocole DVB-S2 ; la cinquième étape consistant en ce que la station émettrice de départ aiguille en fonction de leur station réceptrice de destination associée les paquets BBFRAME non codés ayant pour stations réceptrices de destination associées la première station réceptrice de destination et/ou la deuxième station réceptrice de destination sur une première file définissant un premier canal logique associé à la première station réceptrice de destination et une deuxième file définissant un premier canal logique associé à la deuxième station réceptrice de destination ;
- le procédé de routage bord transparent comprend les étapes consistant en ce que :
   - dans une première étape, la station émettrice de départ segmente et code des flux de données à haut débit reçu en des paquets BBFRAME codés ayant chacun la structure d'une trame de bande de base BBFRAME codée telle que définie par le protocole DVB-S2 et ayant une station réceptrice de destination associée comprise parmi la première station réceptrice de destination et la deuxième station réceptrice de destination; puis
   - dans une deuxième étape, la station émettrice de départ ajoute l'étiquette de routage bord associée audit paquet BBFRAME codé et formé dans la première étape audit paquet BBFRAME codé, et émet l'ensemble formé par le paquet BBFRAME codé et son étiquette de routage bord associée vers le premier satellite configuré comme le satellite de départ, le paquet BBFRAME codé et l'étiquette d'un seul tenant respectivement associée, émis de manière groupée, étant modulés par une même modulation définie selon le protocole DVB-S2 et compatible du code utilisé pour le paquet DVB-S2 codé ; puis
   - dans une troisième étape, le premier satellite de départ reçoit et démodule chaque paquet BBFRAME codé et son étiquette ajoutée correspondante émis par la première station émettrice dans la deuxième étape, et extrait de l'étiquette de routage bord l'information d'identification de la station réceptrice de destination pour router, de manière transparente à l'aide du réseau spatial, le paquet BBFRAME codé vers le satellite de destination correspondant à la station réceptrice de destination du paquet BBFRAME codé ;
- la première étape comprend une quatrième étape et une cinquième étape exécutées successivement ; la quatrième étape consistant en ce que la station émettrice de départ segmente des flux de données à haut débit reçu en des paquets BBFRAME non codés ayant chacun la structure d'une trame de bande de base avant codage telle que définie dans le protocole DVB-S2 ; la cinquième étape consistant en ce que la station émettrice de départ, ou bien code les paquets BBFRAME non codés en des paquets BBFRAME codés puis aiguille en fonction de leur station réceptrice de destination associée les paquets BBFRAME codés ayant pour stations réceptrices de destination associées la première station réceptrice de destination et/ou la deuxième station réceptrice de destination sur une première file définissant un premier canal logique associé à la première station réceptrice de destination et une deuxième file définissant un premier canal logique associé à la deuxième station réceptrice de destination, ou bien aiguille en fonction de leur station réceptrice de destination associée les paquets BBFRAME non codés ayant pour stations réceptrices de destination associées la première station réceptrice de destination et/ou la deuxième station réceptrice de destination sur une première file définissant un premier canal logique associé à la première station réceptrice de destination et une deuxième file définissant un premier canal logique associé à la deuxième station réceptrice de destination, puis en sortie de chaque file code les paquets BBFRAME non codés en des paquets BBFRAME codés ;
- l'étiquette bord de routage ajoutée est codée par un codage dédiée exclusivement à l'étiquette à un taux fixé, indépendant de la station émettrice et des stations réceptrices ;
- le procédé bord de routage transparent comprend en outre une sixième étape, exécutée après la troisième étape, au cours de laquelle le premier satellite de départ élabore des informations de routage du paquet de données codé ou non codé à partir de l'information d'identification de la station réceptrice de destination et d'informations de signalisation prédéterminées concernant des chemins optimisés de transit du paquet de donnés, utilisables au sein du réseau spatial entre le satellite de départ et le satellite de destination pertinent ou au sein du routeur interne, et les encode dans un champ de données dédié de l'étiquette de routage selon un protocole prédéterminé, dédié au réseau spatial ou au routeur interne ;
- l'étiquette bord de routage est ou inclut une étiquette définie selon le protocole MPLS (en anglais « Multi-Protocol Label Switching ») ou une étiquette définie selon le protocole VLAN Ethernet ou une étiquette PLHEADER;
- l'étiquette de routage bord comporte des informations supplémentaires comprises dans l'ensemble formé par une première mesure d'un premier rapport signal à bruit et interférence de la liaison montante depuis la station émettrice vers le satellite de départ, des deuxième mesures de deuxièmes rapports signal à bruit et interférence des liaisons descendantes depuis les stations réceptrices de destination vers la station émettrice, et des numéros d'une numérotation pour un ré-ordonnancement ;
- chaque paquet BBFRAME avant codage comporte un ou plusieurs paquets GSE définis selon le protocole GSE ;
- le système de télécommunications comprend en outre au moins une station réceptrice supplémentaire de destination et un satellite supplémentaire, le satellite supplémentaire étant différent des deuxième et troisième satellites de destination, configuré comme un satellite de destination vis-à-vis de la station réceptrice de destination, et connecté directement à la station réceptrice supplémentaire de destination par une liaison radioélectrique descendante supplémentaire depuis le satellite de destination supplémentaire ; le premier satellite de départ, les deuxième, troisième satellites de destination et l'au moins un satellite supplémentaire de destination étant interconnectés entre eux par le réseau spatial ; et la station émettrice de départ segmente des flux de données à haut débit reçus en des paquets BBFRAME codés ou non codés, les paquets BBFRAME codés ou non codés ayant chacun la structure d'une trame de bande de base BBFRAME codée ou non codée telle que définie par le protocole DVB-S2 et une station réceptrice de destination associée comprise parmi la deuxième station réceptrice de destination, la troisième station réceptrice de destination et l'au moins une station réceptrice supplémentaire de destination.

L'invention a également pour objet un système de télécommunications de télécommunications par satellites selon une première forme de réalisation pour fournir des services de télécommunications à débit élevé comprenant :
- une station émettrice de départ, une première station réceptrice de destination, une deuxième station réceptrice de destination, et une pluralité d'au moins un satellite(s); et
- une première liaison radioélectrique montante qui connecte la station émettrice de départ à un premier satellite de la pluralité, configuré comme un satellite de départ vis-à-vis de la station émettrice de départ;
- une deuxième liaison radioélectrique descendante qui connecte, dans une première configuration, la première station réceptrice de destination à un deuxième satellite de la pluralité, configuré comme un premier satellite de destination vis-à-vis de la première station réceptrice de destination, ou qui connecte, dans une deuxième configuration et une troisième configuration, la première station réceptrice de destination au premier satellite, configuré comme un premier satellite de destination vis-à-vis de la première station réceptrice de destination;
- une troisième liaison radioélectrique descendante radioélectrique qui connecte, dans la première configuration, la deuxième station réceptrice de destination à un troisième satellite de la pluralité, configuré comme un deuxième satellite de destination vis-à-vis de la deuxième station réceptrice de destination, ou qui connecte, dans la deuxième configuration, la deuxième station réceptrice de destination à un deuxième satellite de la pluralité, configuré comme un deuxième satellite de destination vis-à-vis de la deuxième station réceptrice de destination, ou qui connecte dans la troisième configuration, la deuxième station réceptrice de destination au premier satellite, configuré comme un deuxième satellite de destination vis-à-vis de la deuxième station réceptrice de destination. Les premier, deuxième et troisième satellites de la première configuration ou les premier et deuxième satellites de la deuxième configuration étant interconnectés entre eux par un réseau spatial comportent au moins deux ou au moins une liaison(s) inter-satellites, et le premier satellite de la troisième configuration comporte un routeur interne. Le système de télécommunications par satellites est caractérisé en ce que :
- la station émettrice de départ est configurée pour, dans une première étape, segmenter et coder des flux de données à haut débit reçus en des paquets BBFRAME codés ayant chacun la structure d'une trame de bande de base BBFRAME codée telle que définie par le protocole DVB-S2 et une station réceptrice de destination associée comprise parmi la première station réceptrice de destination et la deuxième station réceptrice de destination; puis dans une deuxième étape, ajouter audit paquet BBFRAME codé et formé dans la première étape, une étiquette de routage bord associée, et émettre l'ensemble formé par le paquet BBFRAME et son étiquette de routage bord associée vers le premier satellite configuré comme satellite de départ, l'étiquette de routage bord associée audit paquet BBFRAME codée contenant un identifiant de la station réceptrice de destination associée audit paquet BBFRAME codé, et le paquet BBFRAME codé et l'étiquette de routage bord d'un seul tenant respectivement associée, émis de manière groupée étant modulés par une même modulation définie selon le protocole DVB-S2 et compatible du code utilisé pour le paquet DVB-S2 ; et
- le premier satellite de départ est configurée pour, dans une troisième étape, recevoir et démoduler chaque paquet BBFRAME codé et son étiquette de routage bord ajoutée correspondante, émis par la station émettrice de départ dans la deuxième étape, et extraire de l'étiquette de routage bord l'information d'identification de la station réceptrice de destination pour router, de manière transparente à l'aide du réseau spatial, le paquet BBFRAME codé vers le satellite de destination correspondant à la station réceptrice de destination du paquet BBFRAME codé.

Suivant des modes particuliers de réalisation de la première forme de réalisation du système, le système de télécommunications par satellites comprend l'une ou plusieurs des caractéristiques suivantes :
- la première station émettrice de départ est configurée pour, dans une quatrième étape incluse dans la première étape, segmenter les flux de données à haut débit reçus en des paquets BBFRAME non codés ayant chacun la structure d'une trame de bande de base avant codage telle que définie dans le protocole DVB-S2 ; puis dans une cinquième étape, consécutive à la quatrième étape, ou bien coder les paquets BBFRAME non codés en des paquets BBFRAME codés puis aiguiller en fonction de leur station réceptrice de destination associée les paquets BBFRAME codés ayant pour stations réceptrices de destination associées la première station réceptrice de destination et/ou la deuxième station réceptrice de destination sur une première file définissant un premier canal logique associé à la première station réceptrice de destination et une deuxième file définissant un premier canal logique associé à la deuxième station réceptrice de destination, ou bien aiguiller en fonction de leur station réceptrice de destination associée les paquets BBFRAME non codés ayant pour stations réceptrices de destination associées la première station réceptrice de destination et/ou la deuxième station réceptrice de destination sur une première file définissant un premier canal logique associé à la première station réceptrice de destination et une deuxième file définissant un premier canal logique associé à la deuxième station réceptrice de destination, puis en sortie de chaque file coder les paquets BBFRAME non codés en des paquets BBFRAME codés.

L'invention a également pour objet un système de télécommunications de télécommunications par satellites selon une deuxième forme de réalisation pour fournir des services de télécommunications à débit élevé comprenant :
- une station émettrice de départ, une première station réceptrice de destination, une deuxième station réceptrice de destination, et une pluralité d'au moins un satellite(s) ; et
- une première liaison radioélectrique montante qui connecte la station émettrice de départ à un premier satellite de la pluralité, configuré comme un satellite de départ vis-à-vis de la station émettrice de départ;
- une deuxième liaison radioélectrique descendante qui connecte, dans une première configuration, la première station réceptrice de destination à un deuxième satellite de la pluralité, configuré comme un premier satellite de destination vis-à-vis de la première station réceptrice de destination, ou qui connecte, dans une deuxième configuration et une troisième configuration, la première station réceptrice de destination au premier satellite, configuré comme un premier satellite de destination vis-à-vis de la première station réceptrice de destination;
- une troisième liaison radioélectrique descendante radioélectrique qui connecte, dans la première configuration, la deuxième station réceptrice de destination à un troisième satellite de la pluralité, configuré comme un deuxième satellite de destination vis-à-vis de la deuxième station réceptrice de destination, ou qui connecte, dans la deuxième configuration, la deuxième station réceptrice de destination à un deuxième satellite de la pluralité, configuré comme un deuxième satellite de destination vis-à-vis de la deuxième station réceptrice de destination, ou qui connecte dans la troisième configuration, la deuxième station réceptrice de destination au premier satellite, configuré comme un deuxième satellite de destination vis-à-vis de la deuxième station réceptrice de destination. Les premier, deuxième et troisième satellites de la première configuration ou les premier et deuxième satellites de la deuxième configuration, sont interconnectés entre eux par un réseau spatial comportant au moins deux ou au moins une liaison(s) inter-satellites, et le premier satellite de la troisième configuration comporte un routeur interne. Le système de télécommunications par satellites est caractérisé en ce que :
- la station émettrice de départ est configurée pour, dans une première étape, segmenter des flux de données à haut débit reçus en des paquets BBFRAME non codés de grande taille ayant chacun la structure d'une trame de bande de base BBFRAME non codée telle que définie par le protocole DVB-S2 et dans laquelle un champ de données est réservé en tête et au sein de la charge utile du paquet BBFRAME non codé pour recevoir une étiquette de routage bord d'un seul tenant associé, contenant un identifiant de la station réceptrice de destination associée audit paquet BBFRAME non codé ; et
- la station émettrice de départ est configurée pour, dans une deuxième étape, insérer dans l'étiquette de routage bord un identifiant de la station réceptrice de destination associée audit paquet BBFRAME non codé, coder le paquet BBFRAME non codé complété en un paquet BBFRAME codé, et émettre le paquet BBFRAME codé vers le premier satellite, configuré comme satellite de départ, le paquet BBFRAME codé émis étant modulé par une modulation prédéterminée, définie selon le protocole DVB-S2 et compatible du code utilisé pour le paquet DVB-S2 ; et
- le premier satellite de départ est configuré pour, dans une troisième étape, recevoir, démoduler et décoder chaque paquet BBFRAME codé, émis par la station émettrice de départ dans la deuxième étape, et extraire de l'étiquette de routage bord l'information d'identification de la station réceptrice de destination pour router, de manière transparente à l'aide du réseau spatial le paquet BBFRAME décodé vers le satellite de destination correspondant à la station réceptrice de destination du paquet BBFRAME non codé.

Suivant des modes particuliers de réalisation de la deuxième forme de réalisation du système, le système de télécommunications par satellites comprend l'une ou plusieurs des caractéristiques suivantes :
- la station émettrice de départ est configurée pour, dans une quatrième étape incluse dans la première étape, segmenter des flux de données à haut débit reçus en des paquets BBFRAME non codés ayant chacun la structure d'une trame de bande de base avant codage telle que définie dans le protocole DVB-S2 ; et la station émettrice de départ est configurée pour, dans une cinquième étape consécutive à la quatrième étape, aiguiller en fonction de leur station réceptrice de destination associée les paquets BBFRAME non codés ayant pour stations réceptrices de destination associées la première station réceptrice de destination et/ou la deuxième station réceptrice de destination sur une première file définissant un premier canal logique associé à la première station réceptrice de destination et une deuxième file définissant un premier canal logique associé à la deuxième station réceptrice de destination.

L'invention a également pour objet un produit ou programme d'ordinateur comprenant un ensemble d'instructions configurées pour mettre en oeuvre le procédé de routage transparent défini tel décrit ci-dessus lorsqu'elles sont chargées dans et exécutées par un calculateur ou plusieurs calculateurs, implémentés dans le système de télécommunications tel que défini ci-dessus.

L'invention sera mieux comprise à la lecture de la description de plusieurs formes de réalisation qui va suivre, donnée uniquement à titre d'exemple et faite en se référant aux dessins sur lesquels :
- la Figure 1 est une vue d'une première configuration d'un système de télécommunications selon l'invention ;
- la Figure 2 est une vue d'une deuxième configuration d'un système de télécommunications selon l'invention ;
- la Figure 3 est une vue d'une troisième configuration d'un système de télécommunications selon l'invention ;
- la Figure 4 est un ordinogramme d'un premier mode de réalisation d'un procédé bord de routage transparent de paquets de données à très haut débit selon l'invention, mis en oeuvre par les systèmes de télécommunications décrits dans les Figures 1 à 3;
- la Figure 5 est une vue de la trame BBFRAME d'un paquet non codé, élaboré au cours du procédé bord de routage selon le premier mode de réalisation de l'invention de la Figure 4 ;
- la Figure 6 est une vue ordinogramme détaillée d'un exemple de réalisation de la première étape du procédé de routage bord transparent de la Figure 4 ;
- la Figure 7 est une vue d'un exemple particulier d'implémentation, au sein de la station émettrice de départ du système de télécommunications des Figures 1 à 3, de la première étape de la Figure 4 du procédé de routage transparent de la Figure 4 ;
- la Figure 8 est un ordinogramme d'un deuxième mode de réalisation d'un procédé bord de routage transparent de paquets de données à très haut débit selon l'invention, mis en oeuvre par les configurations du système de télécommunications décrites dans les Figures 1 à 3 ;
- la Figure 9 est un ordinogramme détaillée d'un exemple de réalisation de la première étape du procédé de routage bord transparent de la Figure 8 ;
- la Figure 10 est une vue d'un exemple particulier d'implémentation, au sein de la station émettrice de départ du système de télécommunications des Figures 1 à 3, de la première étape de la Figure 9 du procédé de routage transparent de la Figure 8 ;
- les Figures 11A, 11B et 11C sont trois modes de réalisation différents d'association d'une étiquette de routage bord et d'un paquet codé selon la norme DVB-S2, l'étiquette de routage bord étant celle utilisée par le procédé bord de routage transparent de la Figure 8 ;
- la Figure 12 est une vue d'un format d'une l'étiquette de routage bord utilisée par les procédés bord de routage transparent des Figures 4 et 8, lorsque l'étiquette de routage bord est une étiquette MPLS (en anglais « Multi-Protocol Label Switching ») définie selon la norme de l'IETF (en anglais « Internet Engineering Task Force ») ;
- les Figures 13A et 13B sont des ordinogrammes d'une variante des procédés bord de routage transparent respectifs des Figures 4 et 8, dans laquelle une étape supplémentaire complète les troisièmes étapes respectives ;
- la Figure 14 est une pile de protocole selon une représentation OSI (en anglais « Open Systems Interconnexion ») d'un procédé de transfert de paquets de données IP à haut débit depuis une station émettrice à une station réceptrice, le procédé de transfert utilisant les procédés bord de routage transparent de paquets de données à très haut débit selon l'invention des Figures 4 et 8.

Le principe de base de l'invention est fondé sur une commutation, directe et transparente à une modulation près, réalisée à bord d'au moins un satellites, de paquets de grandes tailles organisés suivant des trames définies par la norme DVB-S2 (en anglais « Digital Video Broadcasting - ) en fonction d'une étiquette de commutation ou routage bord. Cette étiquette de commutation bord peut être insérée au sol ou déduite en fonction du couple spot/fréquence de l'accès au segment spatial, si ce couple permet une identification unique de la station émettrice d'accès à un satellite de départ. Cette étiquette de commutation, récupérée à bord après démodulation et éventuellement décodage, ou déduite, est utilisée ensuite pour la commutation bord elle-même.

Par la suite, un terminal, fixe ou mobile au sol, ou embarqué à bord d'un aéronef ou d'un ballon stratosphérique, sera désigné par le terme « station ».

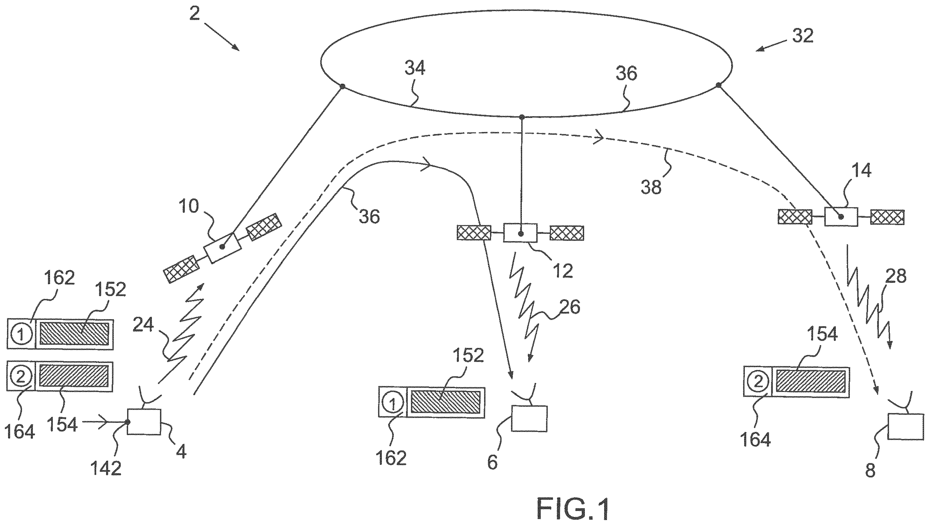

Suivant la Figure 1 et une première configuration, un système de télécommunications par satellites 2 selon l'invention est configuré pour fournir des services de télécommunications à débit élevé, c'est-à-dire acheminer des services de débit supérieur à 50 Mbps par terminal ou station.

Le système de télécommunications 2 comprend une station émettrice de départ 4, une première station réceptrice de destination 6, une deuxième station réceptrice de destination 8, un premier satellite 10 configuré comme un satellite de départ vis-à-vis de la station émettrice de départ, un deuxième satellite 12 configuré comme un premier satellite de destination vis-à-vis de la première station réceptrice de destination 6, et un troisième satellite 14 configuré comme un deuxième satellite de destination vis-à-vis de la deuxième station réceptrice de destination 8.

Le premier satellite 10 est connecté directement à la station émettrice de départ 4 par une première liaison radioélectrique montante 24 qui part de la station émettrice de départ 4.

Le deuxième satellite 12 est connecté directement à la première station réceptrice de destination 6 par une deuxième liaison radioélectrique descendante 26 qui part du deuxième satellite 12 configuré comme un satellite de destination.

Le troisième satellite 14 est connecté directement à la deuxième station réceptrice de destination 8 par une troisième liaison radioélectrique descendante 28 qui part du troisième satellite 14 configuré comme un satellite de destination.

Les premier, deuxième et troisième satellites 10, 12, 14 sont interconnectés par un réseau spatial 32 comportant au moins deux liaisons inter-satellites et éventuellement d'autres satellites formant des noeuds supplémentaires dudit réseau, non représentés.

Il est à remarquer qu'en dépit de la représentation du réseau spatial 32 sur la Figure 1 par un anneau, le réseau spatial peut ne pas comporter de boucle est être un réseau ouvert.

Ici sur la Figure 1, une topologie minimale du réseau spatial est représentée dans laquelle une première liaison inter-satellite 34 relie le premier satellite 10 au deuxième satellite 12, et une deuxième liaison inter-satellite 36 relie le deuxième satellite 12 au troisième satellite 14.

Suivant cette topologie minimale du réseau spatial 32, un paquet de données, envoyé par la station émettrice de départ 4 à la première station réceptrice de destination 6, est configuré pour emprunter un premier chemin d'acheminement 36, tracé en trait continu sur la figure 1, qui transite successivement par le premier satellite 10, en tant que satellite de départ et de relai intermédiaire, et par le deuxième satellite 12 en tant que satellite de destination. Un paquet de données, envoyé par la station émettrice de départ 4 à la deuxième station réceptrice de destination 8, est configuré pour emprunter un deuxième chemin d'acheminement 38, tracé en traits pointillés, qui transite successivement par le premier satellite 10, en tant que satellite de départ et de relai intermédiaire, par le deuxième satellite 12 en tant que satellite de relai intermédiaire, et par le troisième satellite 14 en tant que satellite de destination.

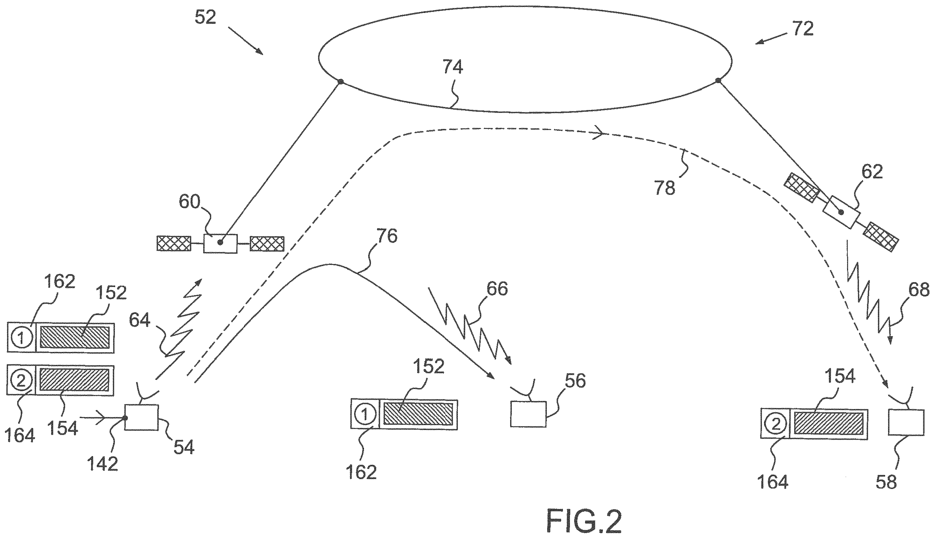

Suivant la Figure 2 et une deuxième configuration, un système de télécommunications par satellites 52 selon l'invention est configuré pour fournir des services de télécommunications à débit élevé.

Le système de télécommunications 52 comprend une station émettrice de départ 54, une première station réceptrice de destination 56, une deuxième station réceptrice de destination 58, un premier satellite 60 configuré à la fois comme un premier satellite de départ vis-à-vis de la station émettrice de départ 54 et comme un premier satellite de destination vis-à-vis de la première station réceptrice de destination 56, et un deuxième satellite 62, configuré comme un deuxième satellite de destination vis-à-vis de la deuxième station réceptrice de destination 58.

Le premier satellite 60 est connecté directement à la station émettrice 54 de départ par une première liaison radioélectrique montante 64 qui part de la station émettrice de départ 54.

Le premier satellite 60 est connecté directement à la première station réceptrice de destination 56 par une deuxième liaison radioélectrique descendante 66 qui part du premier satellite 60, configuré ici comme un satellite de destination vis-à-vis de la première station réceptrice de destination 56.

Le deuxième satellite 62 est connecté directement à la deuxième station réceptrice de destination 58 par une troisième liaison radioélectrique descendante 68 qui part du deuxième satellite 62 configuré comme un satellite de destination vis-à-vis de la deuxième station réceptrice de destination 58.

Les premier et deuxième satellites 69, 62 sont interconnectés par un réseau spatial 72 comportant au moins une liaison inter-satellites et éventuellement d'autres satellites formant des noeuds supplémentaires dudit réseau, non représentés.

Il est à remarquer qu'en dépit de la représentation du réseau spatial par un anneau sur la Figure 2, le réseau spatial 72 peut ne pas comporter de boucle et être un réseau ouvert.

Ici sur la Figure 2, une topologie minimale du réseau spatial 72 est représentée dans laquelle une liaison inter-satellite 74 relie le premier satellite 60 au deuxième satellite 62.

Suivant cette topologie minimale du réseau spatial 72, un paquet de données, envoyé par la station émettrice de départ 54 vers la première station réceptrice de destination 56, est configuré pour emprunter un premier chemin d'acheminement 76, tracé en trait continu, qui transite par le premier satellite 60, en tant que satellite de départ et de destination. Un paquet de données, envoyé par la station émettrice de départ 54 à la deuxième station réceptrice de destination 58, est configuré pour emprunter un deuxième chemin d'acheminement 78, tracé en traits pointillés, qui transite successivement par le premier satellite 60 en tant que satellite de départ et de relai intermédiaire, et par le deuxième satellite 62 en tant que satellite de destination.

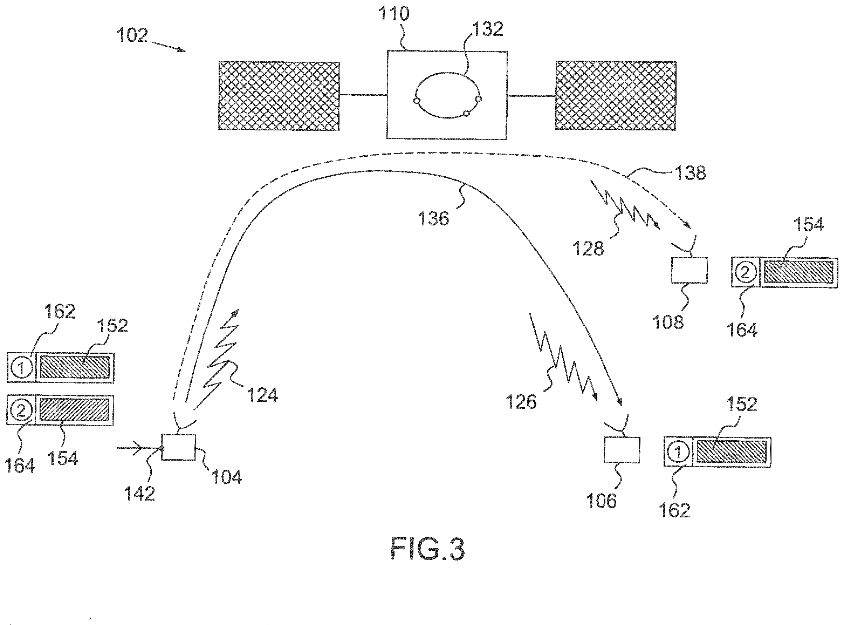

Suivant la Figure 3 et une troisième configuration, un système de télécommunications par satellites 102 selon l'invention est configuré pour fournir des services de télécommunications à débit élevé.

Le système de télécommunications comprend une station émettrice de départ 104, une première station réceptrice de destination 106, une deuxième station réceptrice de destination 108, un premier satellite géostationnaire 110, configuré à la fois comme un premier satellite de départ vis-à-vis de la station émettrice de départ 104, comme un premier satellite de destination vis-à-vis de la première station réceptrice de destination 106 et comme un deuxième satellite de destination vis-à-vis de la deuxième station réceptrice de destination 108.

Le premier satellite 110 est connecté directement à la station émettrice de départ par une première liaison radioélectrique montante 124 qui part de la station émettrice de départ.

Le premier satellite 110 est connecté directement à la première station réceptrice de destination 106 par une deuxième liaison radioélectrique descendante 126 qui part du premier satellite 104, configuré ici comme un satellite de destination vis-à-vis de la première station réceptrice de destination 106.

Le premier satellite 110 est connecté directement à la deuxième station réceptrice de destination 108 par une troisième liaison radioélectrique descendante 128 qui part du premier satellite 110, configuré comme un satellite de destination vis-à-vis de la deuxième station réceptrice de destination 108.

Le premier satellite 110 est un satellite géostationnaire régénératif comportant un routeur interne 132. Le routeur interne 132 est configuré pour router et aiguiller un paquet de données, envoyé par la station de départ 104 et dont la station réceptrice de destination est connue, sur la liaison radioélectrique parmi les deuxième et troisième liaisons radioélectriques 126, 128 permettant son acheminement à ladite station réceptrice de destination. Ainsi, lorsque la station réceptrice de destination d'un paquet de données est la première station réceptrice de destination 106, le paquet de données est configuré pour emprunter un premier chemin d'acheminement 136, tracé en trait continu, qui transite par le routeur interne 132 du premier satellite 110, en tant que satellite de départ et de destination, et aboutit via la deuxième liaison radioélectrique descendante 126 à la première station réceptrice de destination 106. Un paquet de données, envoyé par la station émettrice de départ 104 à la deuxième station réceptrice de destination 108, est configuré pour emprunter un deuxième chemin d'acheminement 138, tracé en traits pointillés, qui transite par le routeur interne 132 du premier satellite 110, en tant que satellite de départ et de destination, et aboutit via la troisième liaison radioélectrique 128 à la deuxième station réceptrice de destination 108.

Suivant les Figures 1 à 3 et de manière générale, les stations émettrices de départ 4, 54, 104 sont configurés chacune pour :
- segmenter des flux de données à haut débit reçu en un port d'entrée 142 des paquets 152, 154 codés ou non codés ayant chacun la structure d'une trame de bande de base BBFRAME codée ou non codée telle que définie par le protocole DVB-S2, et ayant chacun une station réceptrice de destination associée comprise parmi la première station réceptrice de destination et la deuxième station réceptrice de destination ; puis
- insérer pour chaque paquet BBFRAME segmenté, codé ou non codé, une étiquette de routage bord d'un seul tenant 162, 164, respectivement associée audit paquet BBFRAME codé ou non codé, 152, 154,
en incluant l'étiquette de routage 162, 164 à l'intérieur et en début d'un champ de données de charge utile dudit paquet BBFRAME lorsque le paquet BBFRAME est non codé, ou
en ajoutant de manière externe l'étiquette de routage 162, 164 audit paquet BBFRAME lorsque paquet BBFRAME est codé.

L'étiquette de routage bord 162, 164, associée audit paquet BBFRAME 152, 154, codé ou non codé, contient un identifiant de la station réceptrice de destination associée audit paquet BBFRAME codé, comprise parmi la première station réceptrice de destination 6, 56, 106 et la deuxième station réceptrice de destination 8, 58, 108.

Suivant les configurations des Figures 1 à 3 et un premier mode de réalisation de l'invention, les stations émettrices de départ 4, 54, 104 sont configurées chacune pour :
- segmenter dans une première étape des flux de données à haut débit reçu en des paquets non codés de grande taille ayant chacun la structure d'une trame de bande de base BBFRAME non codée telle que définie par le protocole DVB-S2 et dans laquelle un champ de données est réservé en tête et au sein de la charge utile du paquet BBFRAME non codé pour recevoir une étiquette de routage bord d'un seul tenant, contenant un identifiant de la station réceptrice de destination associée audit paquet BBFRAME non codé ; puis
- dans une deuxième étape, insérer dans l'étiquette de routage un identifiant de la station réceptrice de destination associée audit paquet BBFRAME non codé, coder le paquet BBFRAME non codé en un paquet BBFRAME codé, et émettre paquet BBFRAME codé vers le premier satellite, configuré comme satellite de départ.

Le paquet BBFRAME codé est émis en étant modulé par une modulation prédéterminée, définie selon le protocole DVB-S2 et compatible du code utilisé pour le paquet DVB-S2.

Le premier satellite de départ est configuré pour, dans une troisième étape, recevoir, démoduler et décoder chaque paquet BBFRAME codé, émis par la station émettrice de départ dans la deuxième étape, et extraire de l'étiquette de routage bord l'information d'identification de la station réceptrice de destination pour router, de manière transparente à l'aide du réseau spatial le paquet BBFRAME décodé vers le satellite de destination correspondant à la station réceptrice de destination du paquet BBFRAME non codé.

Le satellite de destination, correspondant à la station réceptrice de destination du paquet BBFRAME non codé, est configuré pour émettre dans une quatrième étape un paquet BBFRAME codé correspondant au paquet BBFRAME non codé en codant le paquet BBFRAME non codé et en le modulant au travers d'un code et d'une modulation prédéterminés et définis selon le protocole DVB-S2.

Suivant les Figures 1 à 3 et un deuxième mode de réalisation de l'invention, les stations émettrices 4, 54, 104 sont configurées chacune pour :
- segmenter et coder dans une première étape des flux de données à haut débit reçus à un port d'entrée respectif en des paquets codés ayant chacun la structure d'une trame de bande de base BBFRAME codée telle que définie par le protocole DVB-S2 et une station réceptrice de destination associée comprise parmi la première station réceptrice et la deuxième station réceptrice; puis
- ajouter dans une deuxième étape audit paquet BBFRAME codé, une étiquette de routage bord d'un seul tenant associé, et émettre vers le premier satellite de départ sur un même flux de données l'ensemble formé par le paquet BBFRAME codé et son étiquette de routage bord associée.

L'étiquette de routage bord associée respectivement audit paquet BBFRAME codée contient un identifiant de la station réceptrice de destination, associée audit paquet BBFRAME codé.

Le paquet BBFRAME codé et l'étiquette de routage bord d'un seul tenant respectivement associée sont émis de manière groupée en étant modulés par une même modulation prédéterminée, définie selon le protocole DVB-S2 et compatible d'un code prédéterminé utilisé pour le paquet DVB-S2.

Le premier satellite de départ est configuré pour démoduler dans une troisième étape chaque paquet BBFRAME codé et son étiquette ajoutée correspondante, émis par la station émettrice de départ dans la deuxième étape, et extraire de l'étiquette de routage bord l'information d'identification de la station réceptrice de destination pour router, de manière transparente à l'aide du réseau spatial 32, 72 ou le routeur interne 132 le paquet BBFRAME codé vers le satellite de destination correspondant à la station réceptrice de destination du paquet BBFRAME codé.

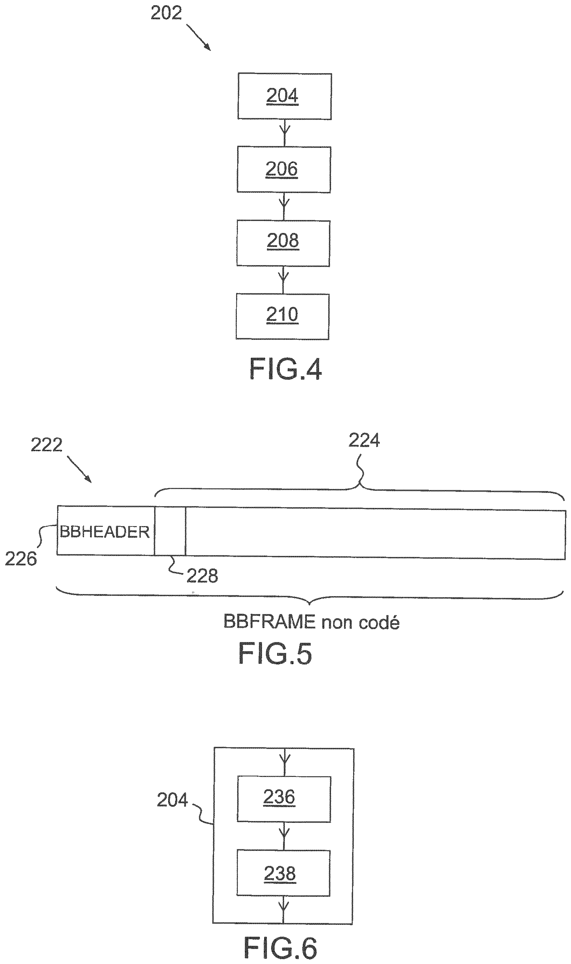

Suivant la Figure 4 et un premier mode de réalisation de l'invention du procédé bord de routage selon l'invention, un procédé bord de routage transparent 202 de paquets de données à débit élevé selon l'invention, mis en oeuvre par un système de télécommunications par satellites 2, 52, 102 tel que décrit dans les Figures 1 à 3 ou un système de télécommunications analogue, comprend des première, deuxième, troisième étapes, 204, 206, 208, 210 exécutées successivement.

Dans la première étape 204, la station émettrice de départ segmente des flux de données à haut débit reçus en des paquets non codés de grande taille ayant chacun la structure d'une trame de bande de base BBFRAME non codée telle que définie par le protocole DVB-S2 et dans laquelle un champ de données est réservé en tête et au sein de la charge utile du paquet BBFRAME non codé pour recevoir une étiquette de routage bord d'un seul tenant, contenant un identifiant de la station réceptrice de destination associée audit paquet BBFRAME non codé.

Puis, dans la deuxième étape 206, la station émettrice de départ insère dans l'étiquette de routage d'un identifiant de la station réceptrice de destination associée audit paquet BBFRAME non codé, code le paquet BBFRAME non codé en un paquet BBFRAME codé, et émet le paquet BBFRAME codé vers le premier satellite, configuré comme satellite de départ, sur un même flux de données.

Le paquet BBFRAME codé est émis en étant modulé par une même modulation prédéterminée, définie selon le protocole DVB-S2 et compatible du code utilisé pour le paquet DVB-S2.

Ensuite dans la troisième étape 208, le premier satellite de départ reçoit, démodule et décode chaque paquet BBFRAME codé, émis par la station émettrice de départ dans la deuxième étape 206, et extrait de l'étiquette de routage bord l'information d'identification de la station réceptrice de destination pour router, de manière transparente à l'aide du réseau spatial le paquet BBFRAME décodé vers le satellite de destination correspondant à la station réceptrice de destination du paquet BBFRAME non codé.

Puis dans la quatrième étape 210, le satellite de destination correspondant à la station réceptrice de destination du paquet BBFRAME décodé, émet un paquet BBFRAME codé correspondant au paquet BBFRAME non codé en codant le paquet BBFRAME non codé et en le modulant au travers d'un code et d'une modulation, prédéterminés et définis selon le protocole DVB-S2.

Suivant la Figure 5, la structure d'un paquet BBFRAME non codé 222 est représentée. Le paquet BBFRAME non codé 222 comporte comme défini par le protocole DVB-S2 un champ de données 224 de charge utile et un champ d'entête 226 DVB-S2. Ici, un champ de données 228 est réservé en début du champ de charge utile 224 pour l'étiquette de routage utilisée lors de la mise en ouvre du procédé de routage bord transparent 202 selon l'invention.

Suivant la Figure 6, la première étape 204 du procédé de routage bord de la Figure 4, comprend une quatrième étape 236 et une cinquième étape 238, exécutées successivement.

La quatrième étape 236 consiste en ce que la station émettrice de départ segmente des flux de données à haut débit reçu en des paquets BBFRAME non codés ayant chacun la structure d'une trame de bande de base avant codage telle que définie dans le protocole DVB-S2.

La cinquième étape 238 consiste en ce que la station émettrice de départ aiguille en fonction de leur station réceptrice de destination associée les paquets BBFRAME non codés ayant pour stations réceptrices de destination associées la première station réceptrice de destination et/ou la deuxième station réceptrice de destination sur une première file définissant un premier canal logique associé à la première station réceptrice de destination et une deuxième file définissant un premier canal logique associé à la deuxième station réceptrice de destination.

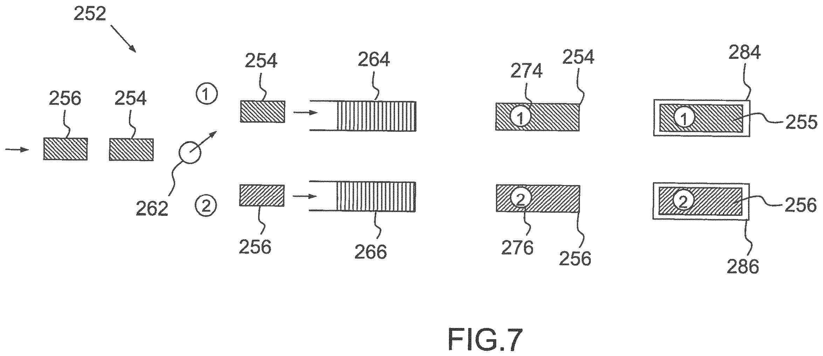

Suivant la Figure 7 et un exemple d'implémentation dans la station émettrice de départ 4, 54, 104 de la première étape 204 décrite de la Figure 6, la première station de départ comporte un ou plusieurs calculateurs électroniques 252, génériques et/ou spécialisés, programmés pour mettre en oeuvre la quatrième étape 236 et un exemple de réalisation de la cinquième étape 238.

Au moins un flux de données haut débit, fourni au port d'entrée 142 de la station émettrice de départ, est segmenté dans la quatrième étape 236 en des paquets BBFRAME 254, 256 non codés ayant chacun la structure d'une trame de bande de base BBFRAME avant codage telle que définie dans le protocole DVB-S2. Ici, seuls deux paquets BBFRAME non codés 254, 256 sont représentés chacun par un rectangle ayant un motif de hachurage différent. Suivant la Figure 7 le premier paquet BBFRAME non codé 254 est représenté par un premier motif de hachures penchées vers la droite tandis que le deuxième paquet BBFRAME non codé 256 est représenté par un deuxième motif de hachures penchées vers la gauche. Puis, les premier et deuxième paquets BBFRAME non codés 254, 256 sont aiguillés par un dispositif d'aiguillage 262 vers une première file 264 et une deuxième file 266. La première file 264, réalisée par exemple par une première mémoire tampon, est réservée exclusivement aux paquets BBFRAME non codés, destinés exclusivement à la première station réceptrice de destination, tandis que deuxième file 266, réalisée ici par une deuxième mémoire tampon, est réservé exclusivement aux paquets BBFRAME non codés, destinés exclusivement à la deuxième station réceptrice de destination

Ensuite, lorsque le premier paquet BBFRAME non codé 254 sort de la première file 264, une première étiquette de routage bord 274, contenant un identifiant de la première station réceptrice de destination du premier paquet non codé 254, est ici incluse à l'intérieur et en début d'un champ de données réservée de la charge utile dudit premier paquet BBFRAME non codé 254. Puis, le premier paquet BBFRAME 254 non codé dont la charge utile a été complétée est codé en une trame BBFRAME codée ou FECFRAME 284 par l'utilisation d'un codage paramétré tel que défini dans le protocole DVB-S2.

En parallèle, lorsque le deuxième paquet BBFRAME non codé 256 sort de la deuxième file 266, une deuxième étiquette de routage bord 276, contenant un identifiant de la deuxième station réceptrice de destination du deuxième paquet codé 256, est ici incluse à l'intérieur et en début d'un champ de données réservé de la charge utile dudit deuxième paquet BBFRAME non codé 256. Puis, le deuxième paquet BBFRAME 256 non codé dont la charge utile a été complétée est codé en une trame BBFRAME codé ou FECFRAME 286 par l'utilisation d'un codage paramétré tel que défini dans le protocole DVB-S2.

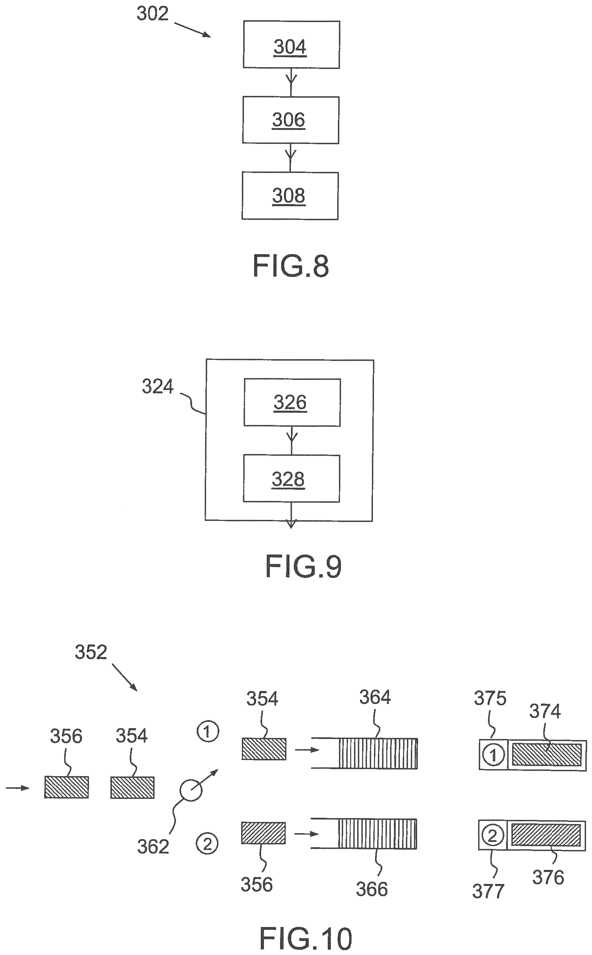

Suivant la Figure 8 et un deuxième mode de réalisation du procédé bord de routage bord transparent selon l'invention, un procédé bord de routage transparent 302 de paquets de données à débit élevé, mis en oeuvre par un système de télécommunications par satellites 2, 52, 102 tel que décrit dans les Figures 1 à 3 ou un système de télécommunications analogue, comprend des première, deuxième, troisième étapes, 304, 306, 308, exécutées successivement.

Dans la première étape 304, la station émettrice de départ segmente et code des flux de données à haut débit reçu en des paquets codés de grande taille ayant chacun la structure d'une trame de bande de base BBFRAME codée telle que définie par le protocole DVB-S2 et une station réceptrice de destination associée, comprise parmi la première station réceptrice de destination et la deuxième station réceptrice de destination.

Puis, dans une deuxième étape 306, la première station émettrice de destination ajoute l'étiquette de routage bord associée audit paquet BBFRAME codé et émet l'ensemble formé par le paquet BBFRAME codé et son étiquette de routage bord associée vers le premier satellite, configuré comme satellite de départ, sur un même flux de données.

L'étiquette de routage bord associée audit paquet BBFRAME codé contient un identifiant de la station réceptrice de destination associée audit paquet BBFRAME codé.

Le paquet BBFRAME codé et l'étiquette de routage bord 162, 164 d'un seul tenant respectivement associée sont émis de manière groupée en étant modulés par une même modulation prédéterminée, définie selon le protocole DVB-S2 et compatible du code utilisé pour le paquet DVB-S2.

Ensuite dans la troisième étape 308, le premier satellite de départ reçoit et démodule chaque paquet BBFRAME codé et son étiquette ajoutée correspondante, émis par la station émettrice de départ dans la deuxième étape 306, et extrait de l'étiquette de routage bord l'information d'identification de la station réceptrice de destination pour router, de manière transparente à l'aide du réseau spatial 32, 72 ou du routeur interne 132, le paquet BBFRAME codé vers le satellite de destination correspondant à la station réceptrice de destination du paquet BBFRAME codé.

Suivant la Figure 9 et un mode de réalisation particulier 324 de la première étape 304 de la Figure 8, la première étape 324 comprend une quatrième étape 326 et une cinquième étape 328, exécutées successivement.

La quatrième étape 326 consiste en ce que la station émettrice de départ segmente des flux de données à haut débit reçu en des paquets BBFRAME de grande taille non codés ayant chacun la structure d'une trame de bande de base avant codage telle que définie dans le protocole DVB-S2.

La cinquième étape 328 consiste en ce que la station émettrice de départ :
- ou bien code les paquets BBFRAME non codés en des paquets BBFRAME codés, puis aiguille en fonction de leur station réceptrice de destination associée les paquets BBFRAME codés ayant pour stations réceptrices de destination associées la première station réceptrice de destination et/ou la deuxième station réceptrice de destination sur une première file définissant un premier canal logique associé à la première station réceptrice de destination et une deuxième file définissant un premier canal logique associé à la deuxième station réceptrice de destination ;
- ou bien aiguille en fonction de leur station réceptrice de destination associée les paquets BBFRAME non codés ayant pour stations réceptrices de destination associées la première station réceptrice de destination et/ou la deuxième station réceptrice de destination sur une première file définissant un premier canal logique associé à la première station réceptrice de destination et une deuxième file définissant un premier canal logique associé à la deuxième station réceptrice de destination, puis en sortie de chaque file code les paquets BBFRAME non codés en des paquets BBFRAME codés.

L'ajout des étiquettes de routage bord aux paquets BBFRAME codés est réalisé en sortie des files d'attente et le contenu de l'étiquette est fonction de la file de sortie.

Le codage des paquets BBFRAME en des paquets BBFRAME codés est un codage tel que défini dans le protocole DVB-S2, paramétrable en fonction d'un vecteur de commande MODCOD, fourni et défini dans le même protocole DVB-S2.

Suivant la Figure 10 et un exemple d'implémentation dans la station émettrice de départ 4, 54, 104 de la première étape 324 décrits de la Figure 7, la première station de départ comporte un ou plusieurs calculateurs électroniques 352, génériques et/ou spécialisés, programmés pour mettre en oeuvre la quatrième étape 326 et un exemple de réalisation de la cinquième étape 328.

Au moins un flux de données haut débit, fourni au port d'entrée de la station émettrice de départ, est segmenté dans la quatrième étape 326 en des paquets BBFRAME 354, 356 non codés ayant chacun la structure d'une trame de bande de base BBFRAME avant codage telle que définie dans le protocole DVB-S2. Ici, seuls deux paquets BBFRAME non codés 354, 356 sont représentés chacun par un rectangle ayant un motif de hachurage différents. Suivant la Figure 10 le premier paquet BBFRAME non codé 354 est représenté par un premier motif de hachures penchées vers la droite tandis que le deuxième paquet BBFRAME non codé 356 est représenté par un deuxième motif de hachures penchées vers la gauche. Puis, les premier et deuxième paquets BBFRAME non codés 354, 356 sont aiguillés par un dispositif d'aiguillage 362 vers une première file 364 et une deuxième file 366. La première file 364, réalisée par exemple par une première mémoire tampon, est réservée exclusivement aux paquets BBFRAME non codés, destinés exclusivement à la première station réceptrice de destination, tandis que deuxième file 366, réalisée ici par une deuxième mémoire tampon, est réservée exclusivement aux paquets BBFRAME non codés, destinés exclusivement à la deuxième station réceptrice de destination

Ensuite, lorsque le premier paquet BBFRAME non codé 354 sorti de la première file 364, ledit premier paquet non codé 354 est codé en un premier paquet BBFRAME codé ou FECFRAME 374 par l'utilisation d'un codage paramétré tel que défini dans le protocole DVB-S2. Puis, une première étiquette de routage bord 375, contenant un identifiant de la première station réceptrice de destination du premier paquet codé 374, est ici ajouté immédiatement en tête dudit premier paquet codé.

En parallèle, lorsque le deuxième paquet BBFRAME non codé 356 sort de la deuxième file 366, ledit deuxième paquet non codé 356 est codé en un deuxième paquet BBFRAME codé 376 par l'utilisation du même codage paramétré tel que défini dans le protocole DVB-S2 que celui appliqué pour le premier paquet BBFRAME non codé 354. Puis, une deuxième étiquette de routage bord 377, contenant un identifiant de la deuxième station réceptrice de destination du deuxième paquet codé 376, est ici ajouté immédiatement en tête dudit deuxième paquet codé.

Comme décrit dans la Figure 9, un autre mode d'implémentation des quatrième et cinquième étapes est possible dans lequel les paquets BBFRAME non codés sont d'abord aiguillés dans les files d'attente, puis codés en sortie des files d'attentes.

En outre, l'étiquette bord ajoutée de routage transparent est placée en tête, ou en queue d'un paquet BBFRAME codé, ou insérée au sein du paquet BBFRAME codé à un rang binaire fixé prédéterminé.

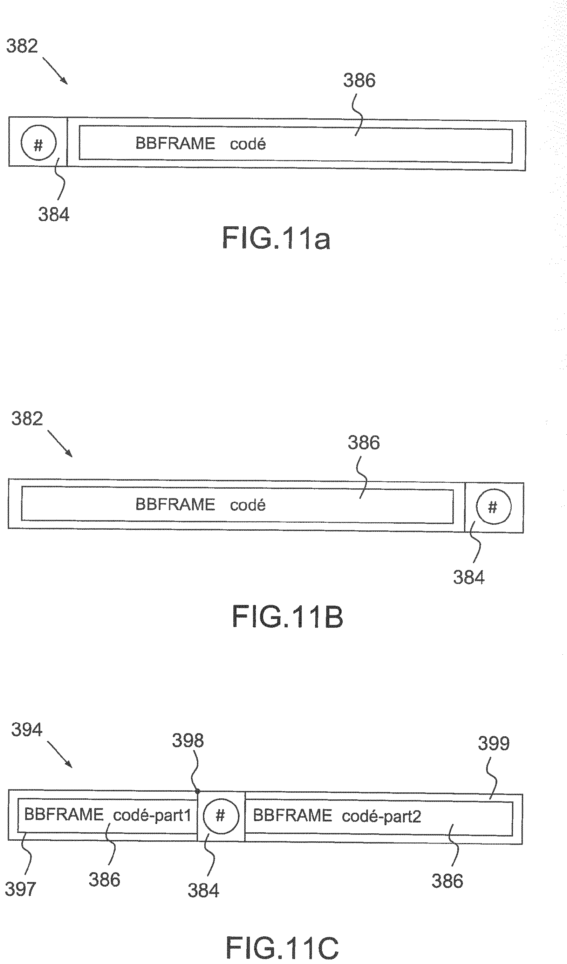

Suivant la Figure 11A et une première configuration 382, une étiquette bord de routage transparent 384 est ajoutée en tête d'un paquet BBFRAME codé 386.

Suivant la Figure 11B et une deuxième configuration 392, l'étiquette bord de routage transparent 384 est ajoutée en queue du paquet BBFRAME codé 386.

Suivant la Figure 11C et une troisième configuration 394, l'étiquette bord de routage transparent 384 est ajoutée et insérée au sein du paquet BBFRAME codé 386 à un niveau 398 dudit paquet 386 codé, divisé en deux portions 397 et 399, le niveau 386 étant repéré par un rang binaire fixé prédéterminé, désigné par i et correspondant au rang du premier bit de l'étiquette bord de routage, consécutif au rang binaire du dernier bit i-1 de la première portion 397 du paquet codé 396.

Par exemple, l'étiquette bord ajoutée de routage est ou comporte une étiquette définie selon le protocole MPLS (en anglais « Multi-Protocol Label Switching ») ou une étiquette définie selon le protocole VLAN Ethernet ou une étiquette PLHEADER.

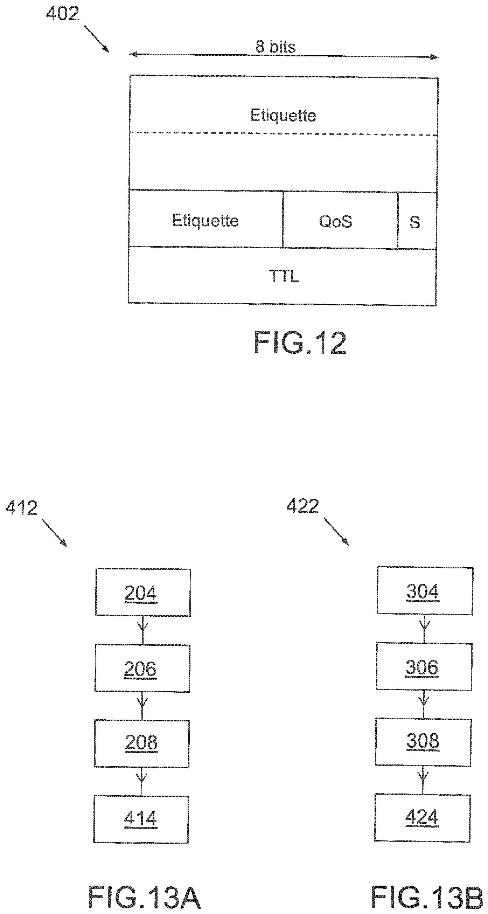

Suivant la Figure 12, le format normalisé d'une étiquette 402 de type MPLS est rappelé. Ce format classique permet une commutation aisée des paquets et facilite également l'interconnexion avec les réseaux sol. Cette étiquette permet également d'introduire des traitements de qualité de service QoS (en anglais « Quality of Service ») pour différencier les trafics véhiculés. Il devient ainsi possible d'utiliser G-MPLS pour le contrôle d'étiquettes comme fait dans les réseaux terrestres.

En variante, les étiquettes bord de commutation ajoutées comportent des informations supplémentaires pour mettre en oeuvre une fonction de codage et modulation adaptatifs ACM (en anglais « Adaptive Code and Modulation) de bout en bout. Dans ce cas, les informations supplémentaires comprennent typiquement une ou plusieurs premières mesures d'un premier rapport signal à bruit et interférence SNIR (en anglais « Signal to Noise and Interference Ratio » de la liaison montante depuis la station émettrice vers le satellite de départ, une ou plusieurs deuxièmes mesures de deuxièmes rapports signal à bruit et interférence des liaisons descendantes depuis les stations réceptrices de destination vers la station émettrice de départ.

Dans une autre variante, les étiquettes bord de commutation comportent des informations supplémentaires comme une numérotation pour un ré-ordonnancement, sous la forme par exemple d'un numéro de séquence sur un ou deux octets suivant les débits

Même si l'utilisation d'une étiquette bord de routage bord est possible, de manière préférée, l'étiquette bord de routage transparent, ajoutée par la station émettrice de départ est codée par un codage dédié exclusivement à l'étiquette à un taux fixé, indépendant de la station émettrice et des stations réceptrices. Par exemple, en raison de la petite taille de l'étiquette bord ajoutée le codage de l'étiquette pourra être un codage de répétition de l'étiquette, associée à un décodage par vote majoritaire.

Suivant la Figure 13A et une variante de réalisation particulière du procédé bord de routage de la Figure 4, un procédé bord de routage 412 comprend les première, deuxième et troisième étapes 204, 206, 208 de la Figure 4, et une sixième étape 414, exécutée après la troisième étape 208.

Au cours de la sixième étape 414, le premier satellite de départ élabore des informations de routage bord ou de commutation bord du paquet de données codé à partir de l'information d'identification de la station réceptrice de destination et d'informations de signalisation prédéterminées. Les informations de signalisation prédéterminées concernent les chemins optimisés de transit du paquet qui sont utilisables au sein du réseau spatial entre le satellite de départ et le satellite de destination pertinent ou au sein du routeur interne d'un satellite unique départ-destination. Au cours de cette même étape 414, des informations de routage bord du paquet de données codé sont encodées dans un champ de données dédié de l'étiquette bord de commutation selon un protocole prédéterminé, dédié au réseau spatial lorsqu'il existe un tel réseau spatial.

Suivant la Figure 13B et une variante de réalisation particulière du procédé bord de routage de la Figure 8, un procédé bord de routage 422 comprend les première, deuxième et troisième étapes 304, 306, 308 de la Figure 8, et une sixième étape 424, exécutée après la troisième étape 308.

Au cours de la sixième étape 424, le premier satellite de départ élabore des informations de routage bord ou de commutation bord du paquet de données codé à partir de l'information d'identification de la station réceptrice de destination et d'informations de signalisation prédéterminées. Les informations de signalisation prédéterminées concernent les chemins optimisés de transit du paquet qui sont utilisables au sein du réseau spatial entre le satellite de départ et le satellite de destination pertinent ou au sein du routeur interne d'un satellite unique départ-destination. Au cours de cette même étape 424, des informations de routage bord du paquet de données codé sont encodées dans un champ de données dédié de l'étiquette bord de commutation selon un protocole prédéterminé, dédié au réseau spatial lorsqu'il existe un tel réseau spatial.

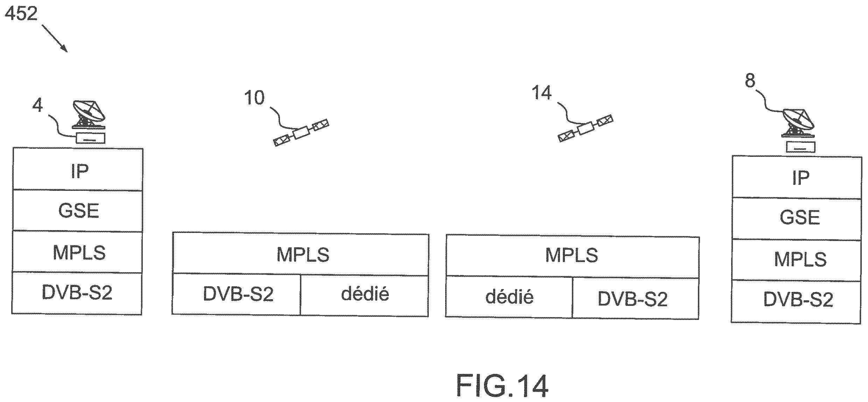

Suivant la Figure 14, une pile 452 de protocoles d'un procédé de transfert de paquets de données IP à haut débit depuis la station émettrice 4 à la station réceptrice de destination 8 est fourni selon une représentation OSI. Le procédé de transfert 452 utilise ici le procédé bord de routage transparent 202 de paquets de données à très haut débit défini suivant le premier mode de réalisation de la Figure 4.

Ici, de manière particulière et non limitative, chaque paquet BBFRAME avant codage comporte au sein de sa charge utile un ou plusieurs paquets GSE définis selon le protocole GSE, qui encapsulent des paquets IP.

L'utilisation d'un procédé de routage bord transparent décrit ci-dessus parmi les première et deuxième stations réceptrices peut être généralisée à un nombre de stations réceptrices de destination supérieur ou égal à trois.

Dans ce cas, le système de télécommunications comprend en outre au moins une station réceptrice supplémentaire de destination et un satellite supplémentaire. Le satellite supplémentaire est différent des deuxième et troisième satellites de destination, et configuré comme un satellite de destination vis-à-vis de la station réceptrice de destination. Le satellite supplémentaire est connecté directement à la station réceptrice supplémentaire de destination par une liaison radioélectrique descendante supplémentaire depuis le satellite de destination supplémentaire. Le premier satellite de départ, les deuxième, troisième satellites de destination et l'au moins un satellite supplémentaire de destination sont interconnectés entre eux par le réseau spatial qui dispose de liaisons inter-satellites et de satellites relai éventuel en nombre suffisant. Dans le cas de cette généralisation et indépendamment du mode de réalisation choisi, la liste des identifiants des stations réceptrices de destination, en tant qu'information pertinente de l'étiquette de routage bord transparent, est élargie pour y inclure la station réceptrice de destinations supplémentaire.

L'utilisation d'un procédé de routage bord transparent 202 selon le premier mode de réalisation dans le procédé de transfert 452 de la Figure 14 peut être étendue à l'utilisation d'un procédé de routage bord transparent 402 selon le deuxième mode de réalisation.

De manière générale, un procédé de routage bord transparent selon l'invention est caractérisé en que :
- la station émettrice de départ segmente des flux de données à haut débit reçu en des paquets codés ou non codés ayant chacun la structure d'une trame de bande de base BBFRAME codée ou non codée telle que définie par le protocole DVB-S2 ; et
- la station émettrice de départ insère pour chaque paquet BBFRAME segmenté, codé ou non codé, une étiquette de routage d'un seul tenant respectivement associée audit paquet BBFRAME codé ou non codé,
en incluant l'étiquette de routage à l'intérieur et en début d'un champ de données de charge utile dudit paquet BBFRAME lorsque le paquet BBFRAME est non codé, ou
en ajoutant de manière externe l'étiquette de routage audit paquet BBFRAME lorsque paquet BBFRAME est codé.

L'étiquette de routage bord associée audit paquet BBFRAME codée ou non codée contenant un identifiant de la station réceptrice de destination associée audit paquet BBFRAME codé, comprise parmi la première station réceptrice de destination et la deuxième station réceptrice de destination.

Etant donné la taille des paquets BBFRAMEs (64800 bits codés) ceci permet de réduire notablement le nombre de paquets à traiter à bord.

Ce procédé de routage bord transparent permet de réduire considérablement les traitements à réaliser à bord pour la commutation, et permet de rendre viable une solution régénérative pour les débits considérés.

Les tailles typiques des paquets IP sont 40 et 1500 octets. Le tableau 1 ci-dessous résume le nombre de paquets par BBFRAME en fonction du taux de codage utilisé. Quatre scénarios de trafic sont considérés :
- 100% de paquets de taille 40 octets
- 100% de paquets de taille 1500 octets
- 50% de paquets de taille 40 octets et 50% de paquets de taille 1500 octets.
- 50% de débit correspondant à des paquets de taille 40 octets et 50% de débit correspondant à des paquets de taille 1500 octets.

**Tableau 1**

| | 40 octets | 1500 octets | Mix50%-50% (nb) | Mix50%-50% (débit) |
|---|---|---|---|---|
| Codage 1/4 | 50 paquets | 2 paquets | 3 paquets | 25 paquets |
| Codage 8/9 | 180 paquets | 5 paquets | 10 paquets | 90 paquets |
| Codage 5/6 | 170 paquets | 5 paquets | 9 paquets | 84 paquets |

Le fonctionnement de la matrice de commutation étant directement liée au nombre de paquets à transmettre, le gain apporté par la commutation de la trame DVB-S2 en terme de traitement bord est donc :

**Tableau 2**

| | 40 octets | 1500 octets | Mix50%-50% (nb) | Mix50%-50% (débit) |
|---|---|---|---|---|
| Codage 1/4 | 4900% | 100% | 200% | 2400% |
| Codage 8/9 | 17900% | 400% | 900% | 8900% |
| Codage 5/6 | 16900% | 400% | 800% | 8500% |

En résumé, le procédé de routage bord transparent selon l'invention permet une diminution de la complexité de commutation d'un facteur 10 à 90 pour des cas typiques.

En outre, le procédé selon l'invention évite l'utilisation de techniques de segmentation/réassemblage ou concaténation bord qui sont consommatrices en ressource de calcul. Enfin, les tailles de paquets sont variables mais seul un sous ensemble limité de taille est à considérer (dépendant du taux de codage uniquement).

L'utilisation d'une étiquette insérée au sol permet également de simplifier l'interconnexion avec les réseaux sol et d'introduire des traitements de QoS différentiés par service.

Il est à remarquer que dans le texte de description ci-dessus, un paquet BBFRAME non codé et un paquet BBFRAME codé sont respectivement désignés par BBFRAME et FECFRAME dans la norme ETSI DVB-S2 document, portant le numéro de référence ETSI EN 302 307-1 et intitulé « Digital Video Broadcasting (DVB), Second génération framing structure ; channel coding and modulation systems for Broadcasting, Interactive Services ; News Gathering and other broadband satellite applications ; Part 1 : DVB-S2 ». La structure des trames respectives du paquet BBFRAME non codé et du paquet BBFRAME codé est décrite dans ce même document.

## Revendications

1. Procédé de routage de bord transparent de paquets de données à débit élevé, mis en oeuvre par un système de télécommunications par satellite(s),
le système de télécommunications par satellite(s) comprenant
. - une station émettrice de départ (4 ; 54 ; 104), une première station réceptrice de destination (6 ; 56 ; 106), une deuxième station réceptrice de destination (8; 58 ; 108), et une pluralité d'au moins un satellite(s) (10, 12, 14; 60, 62 ; 110); et
. - une première liaison radioélectrique montante (24 ; 64 ; 124) qui connecte la station émettrice de départ (4 ; 54 ; 104) à un premier satellite (10 ; 60 ; 110) de la pluralité, configuré comme un satellite de départ vis-à-vis de la station émettrice de départ;
. - une deuxième liaison radioélectrique descendante (26 ; 66 ; 126) qui connecte, dans une première configuration, la première station réceptrice de destination (6) à un deuxième satellite (12) de la pluralité, configuré comme un premier satellite de destination vis-à-vis de la première station réceptrice de destination (6), ou qui connecte, dans une deuxième configuration et une troisième configuration, la première station réceptrice de destination (56 ; 106) au premier satellite (110), configuré comme un premier satellite de destination vis-à-vis de la première station réceptrice de destination (56 ; 106);
. - une troisième liaison descendante (28 ; 68 ; 128), radioélectrique, qui connecte, dans la première configuration, la deuxième station réceptrice de destination (8 ; 58 ; 108) à un troisième satellite (14) de la pluralité, configuré comme un deuxième satellite de destination vis-à-vis de la deuxième station réceptrice de destination (8), ou qui connecte, dans la deuxième configuration, la deuxième station réceptrice de destination (58) à un deuxième satellite (62) de la pluralité, configuré comme un deuxième satellite de destination vis-à-vis de la deuxième station réceptrice de destination (58), ou qui connecte dans la troisième configuration, la deuxième station réceptrice de destination (128) au premier satellite (110), configuré comme un deuxième satellite de destination vis-à-vis de la deuxième station réceptrice de destination (108);
les premier, deuxième et troisième satellites (10, 12, 14) de la première configuration, ou les premier et deuxième satellites (60, 62) de la deuxième configuration étant interconnectés entre eux par un réseau spatial (32 ; 72) comportant au moins deux ou au moins une liaison(s) inter-satellites (34, 36 ; 74), et le premier satellite de la troisième configuration comportant un routeur interne (132) ; le procédé de routage bord transparent étant caractérisé en que :
- la station émettrice de départ (4 ; 54 ; 104) segmente des flux de données à haut débit reçus en des paquets BBFRAME codés ou non codés ayant chacun la structure d'une trame de bande de base BBFRAME codée ou non codée telle que définie par le protocole DVB-S2 ; et
- la station émettrice de départ (4 ; 54; 104) insère pour chaque paquet BBFRAME, codé ou non codé, une étiquette de routage de bord d'un seul tenant respectivement associée audit paquet BBFRAME codé ou non codé,
en incluant l'étiquette de routage de bord à l'intérieur et en début d'un champ de données de charge utile dudit paquet BBFRAME lorsque le paquet BBFRAME est non codé, ou
en ajoutant de manière externe l'étiquette de routage de bord audit paquet BBFRAME lorsque paquet BBFRAME est codé ;
l'étiquette de routage de bord associée audit paquet BBFRAME codée ou non codée contenant un identifiant de la station réceptrice de destination associée audit paquet BBFRAME codé, comprise parmi la première station réceptrice de destination (6 ; 56 ; 106) et la deuxième station réceptrice de destination (8 ; 58 ; 108).

2. Procédé de routage de bord transparent de paquets de données à débit élevé selon la revendication 1, comprenant les étapes consistant en ce que :
. - dans une première étape (204), la station émettrice de départ (4 ; 54 ; 104) segmente des flux de données à haut débit reçu en des paquets BBFRAME non codés de grande taille ayant chacun la structure d'une trame de bande de base BBFRAME non codée telle que définie par le protocole DVB-S2 et dans laquelle un champ de données est réservé en tête et au sein de la charge utile du paquet BBFRAME non codé pour recevoir une étiquette de routage de bord d'un seul tenant associé, contenant un identifiant de la station réceptrice de destination associée audit paquet BBFRAME non codé ; puis
. - dans une deuxième étape (206), la station émettrice de départ (4 ; 54 ; 104) insère dans l'étiquette de routage un identifiant de la station réceptrice de destination associée audit paquet BBFRAME non codé, code le paquet BBFRAME non codé complété en un paquet BBFRAME codé, et émet le paquet BBFRAME codé vers le premier satellite, configuré comme satellite de départ, le paquet BBFRAME codé émis étant modulé par une modulation prédéterminée, définie selon le protocole DVB-S2 et compatible du code utilisé pour le paquet DVB-S2 ; ensuite
. - dans une troisième étape (208), le premier satellite de départ (10 ; 60 ; 110) reçoit, démodule et décode chaque paquet BBFRAME codé, émis par la station émettrice de départ dans la deuxième étape (206), et extrait de l'étiquette de routage de bord l'information d'identification de la station réceptrice de destination pour router, de manière transparente à l'aide du réseau spatial le paquet BBFRAME décodé vers le satellite de destination correspondant à la station réceptrice de destination du paquet BBFRAME non codé.

3. Procédé de routage de bord transparent de paquets de données à débit élevé selon la revendication 2, dans lequel la première étape (204) comprend une quatrième étape (236) et une cinquième étape (238) exécutées successivement, la quatrième étape (236) consistant en ce que la station émettrice de départ segmente des flux de données à haut débit reçu en des paquets BBFRAME non codés ayant chacun la structure d'une trame de bande de base avant codage telle que définie dans le protocole DVB-S2 ; la cinquième étape (238) consistant en ce que la station émettrice de départ aiguille en fonction de leur station réceptrice de destination associée les paquets BBFRAME non codés ayant pour stations réceptrices de destination associées la première station réceptrice de destination et/ou la deuxième station réceptrice de destination sur une première file définissant un premier canal logique associé à la première station réceptrice de destination et une deuxième file définissant un premier canal logique associé à la deuxième station réceptrice de destination.

4. Procédé de routage de bord transparent de paquets de données à débit élevé selon la revendication 1, comprenant les étapes consistant en ce que :
- dans une première étape (304), la station émettrice de départ (4 ; 54 ; 104) segmente et code des flux de données à haut débit reçu en des paquets BBFRAME codés ayant chacun la structure d'une trame de bande de base BBFRAME codée telle que définie par le protocole DVB-S2 et ayant une station réceptrice de destination associée comprise parmi la première station réceptrice de destination et la deuxième station réceptrice de destination ; puis
- dans une deuxième étape (306), la station émettrice de départ (4 ; 54 ; 104) ajoute l'étiquette de routage de bord associée audit paquet BBFRAME codé et formé dans la première étape (304) audit paquet BBFRAME codé, et émet l'ensemble formé par le paquet BBFRAME codé et son étiquette de routage de bord associée vers le premier satellite (10; 60; 110) configuré comme le satellite de départ,
le paquet BBFRAME codé et l'étiquette d'un seul tenant respectivement associée, émis de manière groupée, étant modulés par une même modulation définie selon le protocole DVB-S2 et compatible du code utilisé pour le paquet DVB-S2 codé ; puis
- dans une troisième étape (308), le premier satellite de départ (10 ; 60 ; 110) reçoit et démodule chaque paquet BBFRAME codé et son étiquette ajoutée correspondante émis par la première station émettrice dans la deuxième étape, et extrait de l'étiquette de routage de bord l'information d'identification de la station réceptrice de destination pour router, de manière transparente à l'aide du réseau spatial, le paquet BBFRAME codé vers le satellite de destination correspondant à la station réceptrice de destination du paquet BBFRAME codé.

5. Procédé de routage de bord transparent de paquets de données à débit élevé selon la revendication 4, dans lequel
la première étape (304) comprend une quatrième étape (326) et une cinquième étape (328) exécutées successivement,
la quatrième étape (326) consistant en ce que la station émettrice de départ segmente des flux de données à haut débit reçu en des paquets BBFRAME non codés ayant chacun la structure d'une trame de bande de base avant codage telle que définie dans le protocole DVB-S2 ; la cinquième étape (228) consistant en ce que la station émettrice de départ
ou bien code les paquets BBFRAME non codés en des paquets BBFRAME codés puis aiguille en fonction de leur station réceptrice de destination associée les paquets BBFRAME codés ayant pour stations réceptrices de destination associées la première station réceptrice de destination et/ou la deuxième station réceptrice de destination sur une première file définissant un premier canal logique associé à la première station réceptrice de destination et une deuxième file définissant un premier canal logique associé à la deuxième station réceptrice de destination,
ou bien aiguille en fonction de leur station réceptrice de destination associée les paquets BBFRAME non codés ayant pour stations réceptrices de destination associées la première station réceptrice de destination et/ou la deuxième station réceptrice de destination sur une première file définissant un premier canal logique associé à la première station réceptrice de destination et une deuxième file définissant un premier canal logique associé à la deuxième station réceptrice de destination, puis en sortie de chaque file code les paquets BBFRAME non codés en des paquets BBFRAME codés.

6. Procédé de routage de bord transparent de paquets de données à débit élevé selon l'une quelconque des revendications 4 à 5, dans lequel
l'étiquette de routage de bord ajoutée est codée par un codage dédiée exclusivement à l'étiquette à un taux fixé, indépendant de la station émettrice et des stations réceptrices.

7. Procédé de routage de bord transparent de paquets de données à débit élevé selon l'une quelconque des revendications 2 à 6, comprenant en outre
une sixième étape (414 ; 424), exécutée après la troisième étape (208 ; 308), au cours de laquelle
le premier satellite de départ (10 ; 60 ; 110) élabore des informations de routage du paquet BBFRAME codé ou non codé à partir de l'information d'identification de la station réceptrice de destination et d'informations de signalisation prédéterminées concernant des chemins optimisés de transit du paquet de donnés, utilisables au sein du réseau spatial entre le satellite de départ et le satellite de destination pertinent ou au sein du routeur interne, et les encode dans un champ de données dédié de l'étiquette de routage selon un protocole prédéterminé, dédié au réseau spatial ou au routeur interne.

8. Procédé de routage de bord transparent de paquets de données à débit élevé selon l'une quelconque des revendications 1 à 7, dans lequel l'étiquette de routage de bord est ou inclut une étiquette définie selon le protocole MPLS (en anglais « Multi-Protocol Label Switching ») ou une étiquette définie selon le protocole VLAN Ethernet ou une étiquette PLHEADER.

9. Procédé de routage de bord transparent de paquets de données à débit élevé selon l'une quelconque des revendications 1 à 8, dans lequel l'étiquette de routage de bord comporte des informations supplémentaires comprises dans l'ensemble formé par une première mesure d'un premier rapport signal à bruit et interférence de la liaison montante depuis la station émettrice vers le satellite de départ, des deuxième mesures de deuxièmes rapports signal à bruit et interférence des liaisons descendantes depuis les stations réceptrices de destination vers la station émettrice, et des numéros d'une numérotation pour un ré-ordonnancement.

10. Procédé de routage de bord transparent de paquets de données à débit élevé selon l'une quelconque des revendications 1 à 9, dans lequel chaque paquet BBFRAME avant codage comporte un ou plusieurs paquets GSE définis selon le protocole GSE.

11. Procédé de routage de bord transparent de paquet de données à débit élevé selon l'une quelconque des revendications 1 à 10, dans lequel
le système de télécommunications comprend en outre au moins une station réceptrice supplémentaire de destination et un satellite supplémentaire,
le satellite supplémentaire étant différent des deuxième et troisième satellites de destination, configuré comme un satellite de destination vis-à-vis de la station réceptrice de destination, et connecté directement à la station réceptrice supplémentaire de destination par une liaison radioélectrique descendante supplémentaire depuis le satellite de destination supplémentaire ;
le premier satellite de départ, les deuxième, troisième satellites de destination et l'au moins un satellite supplémentaire de destination étant interconnectés entre eux par le réseau spatial ; et dans lequel
la station émettrice de départ segmente des flux de données à haut débit reçus en des paquets BBFRAME codés ou non codés, les paquets BBFRAME codés ou non codés ayant chacun la structure d'une trame de bande de base BBFRAME codée ou non codée telle que définie par le protocole DVB-S2 et une station réceptrice de destination associée comprise parmi la deuxième station réceptrice de destination, la troisième station réceptrice de destination et l'au moins une station réceptrice supplémentaire de destination.

12. Système de télécommunications par satellites pour fournir des services de télécommunications à débit élevé comprenant
. - une station émettrice de départ (4 ; 54 ; 104), une première station réceptrice de destination (6 ; 56 ; 106), une deuxième station réceptrice de destination (8; 58; 108), et une pluralité d'au moins un satellite(s) (10, 12 14; 60, 62 ; 110); et
. - une première liaison radioélectrique montante (24 ; 64 ; 124) qui connecte la station émettrice de départ (4 ; 54 ; 104) à un premier satellite (10 ; 60 ; 110) de la pluralité, configuré comme un satellite de départ vis-à-vis de la station émettrice de départ;
. - une deuxième liaison radioélectrique descendante (26 ; 66 ; 126) qui connecte, dans une première configuration, la première station réceptrice de destination (6) à un deuxième satellite (12) de la pluralité, configuré comme un premier satellite de destination vis-à-vis de la première station réceptrice de destination (6), ou qui connecte, dans une deuxième configuration et une troisième configuration, la première station réceptrice de destination (56; 106) au premier satellite (60; 110), configuré comme un premier satellite de destination vis-à-vis de la première station réceptrice de destination (56 ; 106);
. - une troisième liaison radioélectrique descendante (28 ; 68 ; 128) qui connecte, dans la première configuration, la deuxième station réceptrice de destination (8 ; 58 ; 108) à un troisième satellite (14) de la pluralité, configuré comme un deuxième satellite de destination vis-à-vis de la deuxième station réceptrice de destination (8), ou qui connecte, dans la deuxième configuration, la deuxième station réceptrice de destination (108) à un deuxième satellite (62) de la pluralité, configuré comme un deuxième satellite de destination vis-à-vis de la deuxième station réceptrice de destination (58), ou qui connecte dans la troisième configuration, la deuxième station réceptrice de destination (128) au premier satellite (110), configuré comme un deuxième satellite de destination vis-à-vis de la deuxième station réceptrice de destination (108) ;
les premier, deuxième et troisième satellites (10, 12, 14) de la première configuration ou les premier et deuxième satellites (60, 62) de la deuxième configuration étant interconnectés entre eux par un réseau spatial (32 ; 72) comportant au moins deux ou au moins une liaison(s) inter-satellites (34, 36 ; 74), et le premier satellite de la troisième configuration comportant un routeur interne (132) ; le système de télécommunications par satellites étant **caractérisé en ce que**
la station émettrice de départ (4 ; 54 ; 104) est configurée pour
- dans une première étape, segmenter et coder des flux de données à haut débit reçus en des paquets BBFRAME codés ayant chacun la structure d'une trame de bande de base BBFRAME codée telle que définie par le protocole DVB-S2 et une station réceptrice de destination associée comprise parmi la première station réceptrice de destination (6; 56; 106) et la deuxième station réceptrice de destination (8 ; 58 ; 108); puis
- dans une deuxième étape, ajouter audit paquet BBFRAME codé et formé dans la première étape, une étiquette de routage de bord associée, et
émettre l'ensemble formé par le paquet BBFRAME et son étiquette de routage de bord associée vers le premier satellite (10; 60; 110) configuré comme satellite de départ,
l'étiquette de routage de bord associée audit paquet BBFRAME codée contenant un identifiant de la station réceptrice de destination associée audit paquet BBFRAME codé, et le paquet BBFRAME codé et l'étiquette de routage de bord d'un seul tenant respectivement associée, émis de manière groupée étant modulés par une même modulation définie selon le protocole DVB-S2 et compatible du code utilisé pour le paquet DVB-S2 ; et
le premier satellite de départ (10 ; 60 ; 110) est configurée pour
dans une troisième étape, recevoir et démoduler chaque paquet BBFRAME codé et son étiquette de routage de ajoutée correspondante, émis par la station émettrice de départ dans la deuxième étape, et extraire de l'étiquette de routage de bord l'information d'identification de la station réceptrice de destination pour router, de manière transparente à l'aide du réseau spatial, le paquet BBFRAME codé vers le satellite de destination correspondant à la station réceptrice de destination du paquet BBFRAME codé.

13. Système de télécommunications par satellites selon la revendication 12, dans lequel
la première station émettrice de départ (4 ; 54 ; 104) est configurée pour
. - dans une quatrième étape incluse dans la première étape, segmenter les flux de données à haut débit reçus en des paquets BBFRAME non codés ayant chacun la structure d'une trame de bande de base avant codage telle que définie dans le protocole DVB-S2 ; puis
. - dans une cinquième étape, consécutive à la quatrième étape,
ou bien coder les paquets BBFRAME non codés en des paquets BBFRAME codés puis aiguiller en fonction de leur station réceptrice de destination associée les paquets BBFRAME codés ayant pour stations réceptrices de destination associées la première station réceptrice de destination et/ou la deuxième station réceptrice de destination sur une première file définissant un premier canal logique associé à la première station réceptrice de destination et une deuxième file définissant un premier canal logique associé à la deuxième station réceptrice de destination,
ou bien aiguiller en fonction de leur station réceptrice de destination associée les paquets BBFRAME non codés ayant pour stations réceptrices de destination associées la première station réceptrice de destination et/ou la deuxième station réceptrice de destination sur une première file définissant un premier canal logique associé à la première station réceptrice de destination et une deuxième file définissant un premier canal logique associé à la deuxième station réceptrice de destination, puis en sortie de chaque file coder les paquets BBFRAME non codés en des paquets BBFRAME codés.

14. Système de télécommunications par satellites pour fournir des services de télécommunications à débit élevé comprenant
. - une station émettrice de départ (4 ; 54 ; 104), une première station réceptrice de destination (6 ; 56 ; 106), une deuxième station réceptrice de destination (8; 58; 108), et une pluralité d'au moins un satellite(s) (10, 12 14; 60, 62 ; 110); et
. - une première liaison radioélectrique montante (24 ; 64 ; 124) qui connecte la station émettrice de départ (4 ; 54 ; 104) à un premier satellite (10 ; 60 ; 110) de la pluralité, configuré comme un satellite de départ vis-à-vis de la station émettrice de départ;
. - une deuxième liaison radioélectrique descendante (26 ; 66 ; 126) qui connecte, dans une première configuration, la première station réceptrice de destination (6) à un deuxième satellite (12) de la pluralité, configuré comme un premier satellite de destination vis-à-vis de la première station réceptrice de destination (6), ou qui connecte, dans une deuxième configuration et une troisième configuration, la première station réceptrice de destination (56; 106) au premier satellite (60; 110), configuré comme un premier satellite de destination vis-à-vis de la première station réceptrice de destination (56 ; 106);
. - une troisième liaison radioélectrique descendante (28 ; 68 ; 128) qui connecte, dans la première configuration, la deuxième station réceptrice de destination (8 ; 58 ; 108) à un troisième satellite (14) de la pluralité, configuré comme un deuxième satellite de destination vis-à-vis de la deuxième station réceptrice de destination (8), ou qui connecte, dans la deuxième configuration, la deuxième station réceptrice de destination (108) à un deuxième satellite (62) de la pluralité, configuré comme un deuxième satellite de destination vis-à-vis de la deuxième station réceptrice de destination (58), ou qui connecte dans la troisième configuration, la deuxième station réceptrice de destination (128) au premier satellite (110), configuré comme un deuxième satellite de destination vis-à-vis de la deuxième station réceptrice de destination (108) ;
les premier, deuxième et troisième satellites (10, 12, 14) de la première configuration ou les premier et deuxième satellites (60, 62) de la deuxième configuration étant interconnectés entre eux par un réseau spatial (32 ; 72) comportant au moins deux ou au moins une liaison(s) inter-satellites (34, 36 ; 74), et le premier satellite de la troisième configuration comportant un routeur interne (132) ;
le système de télécommunications par satellites étant **caractérisé en ce que**
. - la station émettrice de départ (4 ; 54 ; 104) est configurée pour, dans une première étape, segmenter des flux de données à haut débit reçus en des paquets BBFRAME non codés de grande taille ayant chacun la structure d'une trame de bande de base BBFRAME non codée telle que définie par le protocole DVB-S2 et dans laquelle un champ de données est réservé en tête et au sein de la charge utile du paquet BBFRAME non codé pour recevoir une étiquette de routage bord d'un seul tenant associé, contenant un identifiant de la station réceptrice de destination associée audit paquet BBFRAME non codé ; et
. - la station émettrice de départ (4 ; 54 ; 104) est configurée pour, dans une deuxième étape, insérer dans l'étiquette de routage de bord un identifiant de la station réceptrice de destination associée audit paquet BBFRAME non codé, coder le paquet BBFRAME non codé complété en un paquet BBFRAME codé, et émettre le paquet BBFRAME codé vers le premier satellite, configuré comme satellite de départ,
le paquet BBFRAME codé émis étant modulé par une modulation prédéterminée, définie selon le protocole DVB-S2 et compatible du code utilisé pour le paquet DVB-S2 ; et
. - le premier satellite de départ (10 ; 60 ; 110) est configuré pour, dans une troisième étape, recevoir, démoduler et décoder chaque paquet BBFRAME codé, émis par la station émettrice de départ dans la deuxième étape, et extraire de l'étiquette de routage de bord l'information d'identification de la station réceptrice de destination pour router, de manière transparente à l'aide du réseau spatial le paquet BBFRAME décodé vers le satellite de destination correspondant à la station réceptrice de destination du paquet BBFRAME non codé.

15. Système de télécommunications par satellites selon la revendication 14, dans lequel
la station émettrice de départ (4 ; 54 ; 104) est configurée pour, dans une quatrième étape incluse dans la première étape, segmenter des flux de données à haut débit reçus en des paquets BBFRAME non codés ayant chacun la structure d'une trame de bande de base avant codage telle que définie dans le protocole DVB-S2 ; et
la station émettrice de départ (4 ; 54 ; 104) est configurée pour, dans une cinquième étape consécutive à la quatrième étape, aiguiller en fonction de leur station réceptrice de destination associée les paquets BBFRAME non codés ayant pour stations réceptrices de destination associées la première station réceptrice de destination et/ou la deuxième station réceptrice de destination sur une première file définissant un premier canal logique associé à la première station réceptrice de destination et une deuxième file définissant un premier canal logique associé à la deuxième station réceptrice de destination.

16. Produit ou programme d'ordinateur comprenant un ensemble d'instructions, configurées pour mettre en oeuvre le procédé de routage transparent défini selon l'une quelconque des revendications 1 à 11, lorsqu'elles sont chargées dans et exécutées par un ou plusieurs calculateurs implémentés dans le système de télécommunications, défini selon l'une quelconque des revendications 12 à 15.

## Patentansprüche

1. Bordverfahren mit transparentem Routing von Datenpaketen mit hohem Durchsatz, umgesetzt von einem Satelliten-Telekommunikationssystem,
wobei das Satelliten-Telekommunikationssystem Folgendes umfasst:
- eine Ausgangs-Sendestation (4; 54; 104), eine erste Ziel-Empfangsstation (6; 56; 106), eine zweite Ziel-Empfangsstation (8; 58; 108) und eine Vielzahl von mindestens einem oder mehreren Satelliten (10, 12, 14; 60, 62; 110); und
- einen ersten Hochfrequenz-Uplink (24; 64; 124), welcher die Ausgangs-Sendestation (4; 54; 104) mit einem ersten Satelliten (10; 60; 110) der Vielzahl verbindet, konfiguriert als ein Ausgangssatellit in Bezug auf die Ausgangs-Sendestation;
- einen zweiten Hochfrequenz-Downlink (26; 66; 126), welcher in einer ersten Konfiguration die erste Ziel-Empfangsstation (6) mit einem zweiten Satelliten (12) der Vielzahl verbindet, konfiguriert als ein erster Zielsatellit in Bezug auf die erste Ziel-Empfangsstation (6), oder welcher in einer zweiten Konfiguration und in einer dritten Konfiguration die erste Ziel-Empfangsstation (56; 106) mit dem ersten Satelliten (110) verbindet, konfiguriert als ein erster Zielsatellit in Bezug auf die erste Ziel-Empfangsstation (56; 106);
- einen dritten Hochfrequenz-Downlink (28; 68; 128), welcher in der ersten Konfiguration die zweite Ziel-Empfangsstation (8; 58; 108) mit einem dritten Satelliten (14) der Vielzahl verbindet, konfiguriert als ein zweiter Zielsatellit in Bezug auf die zweite Ziel-Empfangsstation (8), oder welcher in der zweiten Konfiguration die zweite Ziel-Empfangsstation (58) mit einem zweiten Satelliten (62) der Vielzahl verbindet, konfiguriert als ein zweiter Zielsatellit in Bezug auf die zweite Ziel-Empfangsstation (58), oder welcher in der dritten Konfiguration die zweite Ziel-Empfangsstation (128) mit dem ersten Satelliten (110) verbindet, konfiguriert als ein zweiter Zielsatellit in Bezug auf die zweite Ziel-Empfangsstation (108);
wobei der erste, der zweite und der dritte Satellit (10, 12, 14) der ersten Konfiguration, oder der erste und der zweite Satellit (60, 62) der zweiten Konfiguration durch ein räumliches Netz (32; 72) miteinander verbunden sind, welches mindestens zwei oder mindestens eine satellitenübergreifende Verbindung(en) (34, 36; 74) umfasst, und der erste Satellit der dritten Konfiguration einen internen Router (132) umfasst;
wobei das Bordverfahren mit transparentem Routing **dadurch kennzeichnet ist, dass**:
- die Ausgangs-Sendestation (4; 54; 104) empfangene Datenflüsse mit hohem Durchsatz in codierte oder uncodierte BBFRAME-Pakete segmentiert, welche jeweils die Struktur eines codierten oder uncodierten BBFRAME-Basisband-Rahmens besitzen, welcher im DVB-S2-Protokoll definiert ist; und
- die Ausgangs-Sendestation (4; 54; 104) für jedes codierte oder uncodierte BBFRAME-Paket ein zusammenhängendes Bordroutinglabel einfügt, welches jeweils mit dem codierten oder uncodierten BBFRAME-Paket verknüpft ist,
indem sie das Bordroutinglabel innerhalb und zu Beginn eines Nutzlast-Datenfeldes des BBFRAME-Paketes einbindet, wenn das BBFRAME-Paket uncodiert ist, oder
indem sie dem BBFRAME-Paket das Bordroutinglabel extern hinzufügt, wenn das BBFRAME-Paket codiert ist;
wobei das mit dem codierten oder uncodierten BBFRAME-Paket verknüpfte Bordroutinglabel eine Kennung der mit dem codierten BBFRAME-Paket verknüpften Ziel-Empfangsstation umfasst, welche ein Element der Gruppe ist, bestehend aus der ersten Ziel-Empfangsstation (6; 56; 106) und der zweiten Ziel-Empfangsstation (8; 58; 108).

2. Bordverfahren mit transparentem Routing von Datenpaketen mit hohem Durchsatz nach Anspruch 1, umfassend die Schritte, bestehend darin, dass:
- in einem ersten Schritt (204) die Ausgangs-Sendestation (4; 54; 104) empfangene Datenflüsse mit hohem Durchsatz in uncodierte BBFRAME-Pakete großer Größe segmentiert, welche jeweils die Struktur eines uncodierten BBFRAME-Basisband-Rahmens besitzen, welcher im DVB-S2-Protokoll definiert ist und in welchem ein Datenfeld im Header und im Innern der Nutzlast des uncodierten BBFRAME-Paketes zur Aufnahme eines verknüpften zusammenhängenden Bordroutinglabels vorbehalten ist, welches eine Kennung der mit dem codierten BBFRAME-Paket verknüpften Ziel-Empfangsstation umfasst; und anschließend
- in einem zweiten Schritt (206) die Ausgangs-Sendestation (4; 54; 104) in das Routinglabel eine Kennung der mit dem uncodierten BBFRAME-Paket verknüpften Ziel-Empfangsstation einfügt, das ergänzte uncodierte BBFRAME-Paket zu einem codierten BBFRAME-Paket codiert und das codierte BBFRAME-Paket an den ersten Satelliten sendet, konfiguriert als Ausgangssatellit,
wobei das gesendete codierte BBFRAME-Paket mit einer vorbestimmten Modulation moduliert wird, welche im DVB-S2-Protokoll definiert ist und mit dem für das DVB-S2-Paket verwendeten Code kompatibel ist; und anschließend
- in einem dritten Schritt (208) der erste Ausgangssatellit (10; 60; 110) jedes codierte BBFRAME-Paket empfängt, demoduliert und decodiert, welches von der Ausgangs-Sendestation im zweiten Schritt (206) gesendet wurde, und aus dem Bordroutinglabel die Kennungsinformation der Ziel-Empfangsstation extrahiert, zum transparenten Routing mit Hilfe des räumlichen Netzes des decodierten BBFRAME-Paketes an den Zielsatelliten, der der Ziel-Empfangsstation des uncodierten BBFRAME-Paketes entspricht.

3. Bordverfahren mit transparentem Routing von Datenpaketen mit hohem Durchsatz nach Anspruch 2, bei welchem:
der erste Schritt (204) einen vierten Schritt (236) und einen fünften Schritt (238) umfasst, welche nacheinander ausgeführt werden,
der vierte Schritt (236) darin besteht, dass die Ausgangs-Sendestation empfangene Datenflüsse mit hohem Durchsatz in uncodierte BBFRAME-Pakete segmentiert, welche jeweils die Struktur eines Basisband-Rahmens vor Codierung besitzen, welcher im DVB-S2-Protokoll definiert ist;
der fünfte Schritt (238) darin besteht, dass die Ausgangs-Sendestation die uncodierten BBFRAME-Pakete je nach verknüpfter Ziel-Empfangsstation wahlweise je nachdem, ob sie als verknüpfte Ziel-Empfangsstation(en) die erste Ziel-Empfangsstation und/oder die zweite Ziel-Empfangsstation besitzen, in eine erste Schlange leitet, welche einen ersten mit der ersten Ziel-Empfangsstation verknüpften logischen Kanal definiert, und in eine zweite Schlange, welche einen ersten mit der zweiten Ziel-Empfangsstation verknüpften logischen Kanal definiert.

4. Bordverfahren mit transparentem Routing von Datenpaketen mit hohem Durchsatz nach Anspruch 1, umfassend die Schritte, bestehend darin, dass:
- in einem ersten Schritt (304) die Ausgangs-Sendestation (4; 54; 104) empfangene Datenflüsse mit hohem Durchsatz in codierte BBFRAME-Pakete segmentiert und codiert, welche jeweils die Struktur eines codierten BBFRAME-Basisband-Rahmens besitzen, welcher im DVB-S2-Protokoll definiert ist, und eine verknüpfte Ziel-Empfangsstation besitzen, welche ein Element der Gruppe ist, bestehend aus der ersten Ziel-Empfangsstation und der zweiten Ziel-Empfangsstation; und anschließend
- in einem zweiten Schritt (306) die Ausgangs-Sendestation (4; 54; 104) das mit dem codierten und im ersten Schritt (304) gebildeten BBFRAME-Paket verknüpfte Bordroutinglabel hinzufügt, und die aus dem codierten BBFRAME-Paket und seinem verknüpften Bordroutinglabel gebildete Gruppe an den ersten Satelliten (10; 60; 110) sendet, welcher als Ausgangssatellit konfiguriert ist,
wobei das codierte BBFRAME-Paket und das jeweils verknüpfte zusammenhängende Label, welche gemeinsam gesendet werden, mit derselben Modulation moduliert werden, welche im DVB-S2-Protokoll definiert ist und mit dem für das codierte DVB-S2-Paket verwendeten Code kompatibel ist; und anschließend
- in einem dritten Schritt (308) der erste Ausgangssatellit (10; 60; 110) jedes codierte BBFRAME-Paket und sein entsprechendes hinzugefügtes Label empfängt und demoduliert, welches von der ersten Ausgangs-Sendestation im zweiten Schritt gesendet wurde, und aus dem Bordroutinglabel die Kennungsinformation der Ziel-Empfangsstation zum transparenten Routing mit Hilfe des räumlichen Netzes des codierten BBFRAME-Paketes an den der Ziel-Empfangsstation des codierten BBFRAME-Paketes entsprechenden Zielsatelliten extrahiert.

5. Bordverfahren mit transparentem Routing von Datenpaketen mit hohem Durchsatz nach Anspruch 4, bei welchem
der erste Schritt (304) einen vierten Schritt (326) und einen fünften Schritt (328) umfasst, welche nacheinander ausgeführt werden,
der vierte Schritt (326) darin besteht, dass die Ausgangs-Sendestation empfangene Datenflüsse mit hohem Durchsatz in uncodierte BBFRAME-Pakete segmentiert, welche jeweils die Struktur eines Basisband-Rahmens vor Codierung besitzen, welcher im DVB-S2-Protokoll definiert ist;
der fünfte Schritt (228) darin besteht, dass die Ausgangs-Sendestation
entweder, die uncodierten BBFRAME-Pakete in codierte BBFRAME-Pakete codiert, und die codierten BBFRAME-Pakete danach je nach verknüpfter Ziel-Empfangsstation wahlweise je nachdem, ob sie als verknüpfte Ziel-Empfangsstation(en) die erste Ziel-Empfangsstation und/oder die zweite Ziel-Empfangsstation besitzen, in eine erste Schlange leitet, welche einen ersten mit der ersten Ziel-Empfangsstation verknüpften logischen Kanal definiert, und in eine zweite Schlange, welche einen ersten mit der zweiten Ziel-Empfangsstation verknüpften logischen Kanal definiert,
oder, die uncodierten BBFRAME-Pakete je nach verknüpfter Ziel-Empfangsstation wahlweise je nachdem, ob sie als verknüpfte Ziel-Empfangsstation(en) die erste Ziel-Empfangsstation und/oder die zweite Ziel-Empfangsstation besitzen, in eine erste Schlange leitet, welche einen ersten mit der ersten Ziel-Empfangsstation verknüpften logischen Kanal definiert, und in eine zweite Schlange, welche einen ersten mit der zweiten Ziel-Empfangsstation verknüpften logischen Kanal definiert, und am Ausgang einer jeden Schlange, die uncodierten BBFRAME-Pakete in codierte BBFRAME-Pakete codiert.

6. Bordverfahren mit transparentem Routing von Datenpaketen mit hohem Durchsatz nach einem der Ansprüche 4 bis 5, bei welchem das hinzugefügte Bordroutinglabel mit einer ausschließlich dem Label zugewiesenen Codierung mit fester Rate codiert wird, welche unabhängig von der Sendestation und den Empfangsstationen ist.

7. Bordverfahren mit transparentem Routing von Datenpaketen mit hohem Durchsatz nach einem der Ansprüche 2 bis 6, zudem umfassend:
einen sechsten Schritt (414; 424), welcher nach dem dritten Schritt (208; 308) ausgeführt wird, in dessen Zuge der erste Ausgangssatellit (10; 60; 110) Routinginformationen des codierten oder uncodierten BBFRAME-Paketes anhand der Kennungsinformation der Ziel-Empfangsstation und von vorbestimmten Signalisierungsinformationen bezüglich optimierter Transitwege des Datenpaketes erzeugt, welche innerhalb des räumlichen Netzes zwischen dem Ausgangssatelliten und dem zutreffenden Zielsatelliten oder innerhalb des internen Routers verwendbar sind, und codiert sie in einem dem Routinglabel zugewiesenen Datenfeld gemäß einem vorbestimmten Protokoll, welches dem räumlichen Netz oder dem internen Router zugewiesen ist.

8. Bordverfahren mit transparentem Routing von Datenpaketen mit hohem Durchsatz nach einem der Ansprüche 1 bis 7, bei welchem das Bordroutinglabel ein im MPLS-Protokoll (in Englisch "Multi-Protocol Label Switching") oder ein im VLAN Ethernet-Protokoll definiertes Label oder ein PLHEADER-Label ist oder ein solches enthält.

9. Bordverfahren mit transparentem Routing von Datenpaketen mit hohem Durchsatz nach einem der Ansprüche 1 bis 8, bei welchem das Bordroutinglabel zusätzliche Informationen enthält, welche in der Gruppe enthalten sind, gebildet aus einer ersten Messung eines ersten Signal-/Rauschen-plus-Interferenz-Verhältnisses des Uplinks von der ersten Sendestation zum Ausgangssatelliten, aus zweiten Messungen zweiter Signal-/Rauschen-plus-Interferenz-Verhältnisse der Downlinks von den Ziel-Empfangsstationen zur Sendestation, und aus den Nummern einer Nummerierung für eine Neuordnung.

10. Bordverfahren mit transparentem Routing von Datenpaketen mit hohem Durchsatz nach einem der Ansprüche 1 bis 9, bei welchem jedes BBFRAME-Paket vor Codierung eines oder mehrere GSE-Pakete umfasst, welche im GSE-Protokoll definiert sind.

11. Bordverfahren mit transparentem Routing von Datenpaketen mit hohem Durchsatz nach einem der Ansprüche 1 bis 10, bei welchem:
das Telekommunikationssystem zudem mindestens eine zusätzliche Ziel-Empfangsstation und einen zusätzlichen Satelliten umfasst,
wobei der zusätzliche Satellit sich vom zweiten und dritten Zielsatelliten unterscheidet, als ein Zielsatellit in Bezug auf die Ziel-Empfangsstation konfiguriert ist, und direkt mit der zusätzlichen Ziel-Empfangsstation durch einen zusätzlichen Hochfrequenz-Downlink vom zusätzlichen Zielsatelliten verbunden ist;
wobei der erste Ausgangssatellit, der zweite und dritte Zielsatellit und der mindestens eine zusätzliche Zielsatellit miteinander durch das räumliche Netz verbunden sind; und bei welchem
die Ausgangs-Sendestation empfangene Datenflüsse mit hohem Durchsatz in codierte oder uncodierte BBFRAME-Pakete segmentiert, wobei die codierten oder uncodierten BBFRAME-Pakete jeweils die Struktur eines codierten oder uncodierten BBFRAME-Basisband-Rahmens besitzen, welcher im DVB-S2-Protokoll, definiert ist, und eine verknüpfte Ziel-Empfangsstation besitzen, welche ein Element der Gruppe ist, bestehend aus der zweiten Ziel-Empfangsstation, der dritten Ziel-Empfangsstation und der mindestens einen zusätzlichen Ziel-Empfangsstation.

12. Satelliten-Telekommunikationssystem zum Erbringen von Telekommunikationsdiensten mit hohem Durchsatz, Folgendes umfassend:
- eine Ausgangs-Sendestation (4; 54; 104), eine erste Ziel-Empfangsstation (6; 56; 106), eine zweite Ziel-Empfangsstation (8; 58; 108) und eine Vielzahl von mindestens einem oder mehreren Satelliten (10, 12, 14; 60, 62; 110); und
- einen ersten Hochfrequenz-Uplink (24; 64; 124), welcher die Ausgangs-Sendestation (4; 54; 104) mit einem ersten Satelliten (10; 60; 110) der Vielzahl verbindet, konfiguriert als ein Ausgangssatellit in Bezug auf die Ausgangs-Sendestation;
- einen zweiten Hochfrequenz-Downlink (26; 66; 126), welcher in einer ersten Konfiguration die erste Ziel-Empfangsstation (6) mit einem zweiten Satelliten (12) der Vielzahl verbindet, konfiguriert als ein erster Zielsatellit in Bezug auf die erste Ziel-Empfangsstation (6), oder welcher in einer zweiten Konfiguration und in einer dritten Konfiguration die erste Ziel-Empfangsstation (56; 106) mit dem ersten Satelliten (60; 110) verbindet, konfiguriert als ein erster Zielsatellit in Bezug auf die erste Ziel-Empfangsstation (56; 106);
- einen dritten Hochfrequenz-Downlink (28; 68; 128), welcher in der ersten Konfiguration die zweite Ziel-Empfangsstation (8; 58; 108) mit einem dritten Satelliten (14) der Vielzahl verbindet, konfiguriert als ein zweiter Zielsatellit in Bezug auf die zweite Ziel-Empfangsstation (8), oder welcher in der zweiten Konfiguration die zweite Ziel-Empfangsstation (108) mit einem zweiten Satelliten (62) der Vielzahl verbindet, konfiguriert als ein zweiter Zielsatellit in Bezug auf die zweite Ziel-Empfangsstation (58), oder welcher in der dritten Konfiguration die zweite Ziel-Empfangsstation (128) mit dem ersten Satelliten (110) verbindet, konfiguriert als ein zweiter Zielsatellit in Bezug auf die zweite Ziel-Empfangsstation (108);
wobei der erste, der zweite und der dritte Satellit (10, 12, 14) der ersten Konfiguration oder der erste und der zweite Satellit (60, 62) der zweiten Konfiguration durch ein räumliches Netz (32; 72) miteinander verbunden sind, welches mindestens zwei oder mindestens eine satellitenübergreifende Verbindung(en) (34, 36; 74) umfasst, und der erste Satellit der dritten Konfiguration einen internen Router (132) umfasst;
wobei das Satelliten-Telekommunikationssystem **dadurch gekennzeichnet ist, dass** die Ausgangs-Sendestation (4; 54; 104) konfiguriert ist, um:
- in einem ersten Schritt empfangene Datenflüsse mit hohem Durchsatz in codierte BBFRAME-Pakete zu segmentieren und zu codieren, welche jeweils die Struktur eines codierten BBFRAME-Basisband-Rahmens besitzen, welcher im DVB-S2-Protokoll definiert ist, und eine verknüpfte Ziel-Empfangsstation besitzen, welche ein Element der Gruppe ist, bestehend aus der ersten Ziel-Empfangsstation (6; 56; 106) und der zweiten Ziel-Empfangsstation (8; 58; 108); und anschließend
- in einem zweiten Schritt dem codierten und im ersten Schritt gebildeten BBFRAME-Paket ein verknüpftes Bordroutinglabel hinzuzufügen, und die aus dem codierten BBFRAME-Paket und seinem verknüpften Bordroutinglabel gebildete Gruppe an den ersten Satelliten (10; 60; 110) zu senden, welcher als Ausgangssatellit konfiguriert ist, wobei das mit dem codierten BBFRAME-Paket verknüpfte Bordroutinglabel eine Kennung der mit dem codierten BBFRAME-Paket verknüpften Ziel-Empfängerstation enthält, und das codierte BBFRAME-Paket und das jeweils verknüpfte zusammenhängende Bordroutinglabel, welche gemeinsam gesendet werden, mit derselben Modulation moduliert werden, welche im DVB-S2-Protokoll definiert ist und mit dem für das codierte DVB-S2-Paket verwendeten Code kompatibel ist; und
der erste Ausgangssatellit (10; 60; 110) konfiguriert ist, um in einem dritten Schritt jedes codierte BBFRAME-Paket und sein entsprechendes hinzugefügtes Routinglabel zu empfangen und zu demodulieren, welches von der Ausgangs-Sendestation im zweiten Schritt gesendet wird, und aus dem Bordroutinglabel die Kennungsinformation der Ziel-Empfangsstation zu extrahieren, zum transparenten Routing mit Hilfe des räumlichen Netzes des codierten BBFRAME-Paketes an den Zielsatelliten, der der Ziel-Empfangsstation des codierten BBFRAME-Paketes entspricht.

13. Satelliten-Telekommunikationssystem nach Anspruch 12, bei welcher die erste Ausgangs-Sendestation (4; 54; 104) konfiguriert ist, um:
- in einem vierten Schritt, welcher im ersten Schritt enthalten ist, die empfangenen Datenflüsse mit hohem Durchsatz in uncodierte BBFRAME-Pakete zu segmentieren, welche jeweils die Struktur eines Basisband-Rahmens vor Codierung besitzen, welcher im DVB-S2-Protokoll definiert ist; und anschließend
- in einem fünften Schritt, welcher auf den vierten Schritt folgt,
entweder, die uncodierten BBFRAME-Pakete in codierte BBFRAME-Pakete zu codieren, und die codierten BBFRAME-Pakete danach je nach verknüpfter Ziel-Empfangsstation wahlweise je nachdem, ob sie als verknüpfte Ziel-Empfangsstation(en) die erste Ziel-Empfangsstation und/oder die zweite Ziel-Empfangsstation besitzen, in eine erste Schlange zu leiten, welche einen ersten mit der ersten Ziel-Empfangsstation verknüpften logischen Kanal definiert, und in eine zweite Schlange, welche einen ersten mit der zweiten Ziel-Empfangsstation verknüpften logischen Kanal definiert,
oder, die uncodierten BBFRAME-Pakete je nach verknüpfter Ziel-Empfangsstation wahlweise je nachdem, ob sie als verknüpfte Ziel-Empfangsstation(en) die erste Ziel-Empfangsstation und/oder die zweite Ziel-Empfangsstation besitzen, in eine erste Schlange zu leiten, welche einen ersten mit der ersten Ziel-Empfangsstation verknüpften logischen Kanal definiert, und eine zweite Schlange, welche einen ersten mit der zweiten Ziel-Empfangsstation verknüpften logischen Kanal definiert, und danach am Ausgang einer jeden Schlange die uncodierten BBFRAME-Pakete in codierte BBFRAME-Pakete zu codieren.

14. Satelliten-Telekommunikationssystem zum Erbringen von Telekommunikationsdiensten mit hohem Durchsatz, Folgendes umfassend:
- eine Ausgangs-Sendestation (4; 54; 104), eine erste Ziel-Empfangsstation (6; 56; 106), eine zweite Ziel-Empfangsstation (8; 58; 108) und eine Vielzahl von mindestens einem oder mehreren Satelliten (10, 12, 14; 60, 62; 110); und
- einen ersten Hochfrequenz-Uplink (24; 64; 124), welcher die Ausgangs-Sendestation (4; 54; 104) mit einem ersten Satelliten (10; 60; 110) der Vielzahl verbindet, konfiguriert als ein Ausgangssatellit in Bezug auf die Ausgangs-Sendestation;
- einen zweiten Hochfrequenz-Downlink (26; 66; 126), welcher in einer ersten Konfiguration die erste Ziel-Empfangsstation (6) mit einem zweiten Satelliten (12) der Vielzahl verbindet, konfiguriert als ein erster Zielsatellit in Bezug auf die erste Ziel-Empfangsstation (6), oder welcher in einer zweiten Konfiguration und in einer dritten Konfiguration die erste Ziel-Empfangsstation (56; 106) mit dem ersten Satelliten (60;110) verbindet, konfiguriert als ein erster Zielsatellit in Bezug auf die erste Ziel-Empfangsstation (56; 106);
- einen dritten Hochfrequenz-Downlink (28; 68; 128), welcher in der ersten Konfiguration die zweite Ziel-Empfangsstation (8; 58; 108) mit einem dritten Satelliten (14) der Vielzahl verbindet, konfiguriert als ein zweiter Zielsatellit in Bezug auf die zweite Ziel-Empfangsstation (8), oder welcher in der zweiten Konfiguration die zweite Ziel-Empfangsstation (108) mit einem zweiten Satelliten (62) der Vielzahl verbindet, konfiguriert als ein zweiter Zielsatellit in Bezug auf die zweite Ziel-Empfangsstation (58), oder welcher in der dritten Konfiguration die zweite Ziel-Empfangsstation (128) mit dem ersten Satelliten (110) verbindet, konfiguriert als ein zweiter Zielsatellit in Bezug auf die zweite Ziel-Empfangsstation (108);
wobei der erste, der zweite und der dritte Satellit (10, 12, 14) der ersten Konfiguration oder der erste und der zweite Satellit (60, 62) der zweiten Konfiguration durch ein räumliches Netz (32; 72) miteinander verbunden sind, welches mindestens zwei oder mindestens eine satellitenübergreifende Verbindung(en) (34, 36; 74) umfasst, und der erste Satellit der dritten Konfiguration einen internen Router (132) umfasst;
wobei das Satelliten-Telekommunikationssystem **dadurch gekennzeichnet ist, dass**:
- die Ausgangs-Sendestation (4; 54; 104) konfiguriert ist, um in einem ersten Schritt empfangene Datenflüsse mit hohem Durchsatz in uncodierte BBFRAME-Pakete großer Größe zu segmentieren, welche jeweils die Struktur eines uncodierten BBFRAME-Basisband-Rahmens besitzen, welcher im DVB-S2-Protokoll definiert ist und in welchem ein Datenfeld im Header und im Innern der Nutzlast des uncodierten BBFRAME-Paketes zur Aufnahme eines verknüpften, zusammenhängenden Bordroutinglabels vorbehalten ist, welches eine Kennung der mit dem uncodierten BBFRAME-Paket verknüpften Ziel-Empfangsstation umfasst; und
- die Ausgangs-Sendestation (4; 54; 104) konfiguriert ist, um in einem zweiten Schritt in das Routinglabel eine Kennung der mit dem uncodierten BBFRAME-Paket verknüpften Ziel-Empfangsstation einzufügen, das ergänzte uncodierte BBFRAME-Paket zu einem codierten BBFRAME-Paket zu codieren und das codierte BBFRAME-Paket an einen ersten Satelliten, konfiguriert als Ausgangssatellit, zu senden,
wobei das gesendete codierte BBFRAME-Paket mit einer vorbestimmten Modulation moduliert wird, welche im DVB-S2-Protokoll definiert ist und mit dem für das codierte DVB-S2-Paket verwendeten Code kompatibel ist; und
- der erste Ausgangssatellit (10; 60; 110) konfiguriert ist, um in einem dritten Schritt jedes codierte BBFRAME-Paket zu empfangen, zu demodulieren und zu decodieren, welches von der Ausgangs-Sendestation im zweiten Schritt gesendet wird, und aus dem Bordroutinglabel die Kennungsinformation der Ziel-Empfangsstation zu extrahieren, zum transparenten Routing mit Hilfe des räumlichen Netzes des decodierten BBFRAME-Paketes an den Zielsatelliten, der der Ziel-Empfangsstation des uncodierten BBFRAME-Paketes entspricht.

15. Satelliten-Telekommunikationssystem nach Anspruch 14, bei welchem
die Ausgangs-Sendestation (4; 54; 104) konfiguriert ist, um in einem vierten Schritt, welcher im ersten Schritt enthalten ist, empfangene Datenflüsse mit hohem Durchsatz in uncodierte BBFRAME-Pakete zu segmentieren, welche jeweils die Struktur eines Basisband-Rahmens vor Codierung besitzen, welcher im DVB-S2-Protokoll definiert ist; und
die Ausgangs-Sendestation (4; 54; 104) konfiguriert ist, um in einem fünften Schritt, welcher auf den vierten Schritt folgt, die uncodierten BBFRAME-Pakete je nach verknüpfter Ziel-Empfangsstation wahlweise je nachdem, ob sie als verknüpfte Ziel-Empfangsstation(en) die erste Ziel-Empfangsstation und/oder die zweite Ziel-Empfangsstation besitzen, in eine erste Schlange zu leiten, welche einen ersten mit der ersten Ziel-Empfangsstation verknüpften logischen Kanal definiert, und in eine zweite Schlange, welche einen ersten mit der zweiten Ziel-Empfangsstation verknüpften logischen Kanal definiert.

16. Produkt oder Computerprogramm, umfassend eine Gruppe von Anweisungen, konfiguriert zum Umsetzen des transparenten Routingverfahrens nach einem der Ansprüche 1 bis 11, wenn diese in einen oder mehrere Rechner geladen werden und durch diese(n) ausgeführt werden, welche(r) im Telekommunikationssystem nach einem der Ansprüche 12 bis 15 implementiert ist/sind.

## Claims

1. Method for transparent on-board routing of data packets at high bit rate, implemented by a satellite telecommunication system,
the satellite telecommunication system comprising
- an origin transmitting station (4; 54; 104), a first destination receiving station (6; 56; 106), a second destination receiving station (8; 58; 108), and a plurality of at least one satellite(s) (10, 12, 14; 60, 62; 110); and
- a first radiofrequency uplink (24; 64; 124) which connects the origin transmitting station (4; 54; 104) to a first satellite (10; 60; 110) of the plurality, configured as an origin satellite with respect to the origin transmitting station;
- a second radiofrequency downlink (26; 66; 126) which connects, in a first configuration, the first destination receiving station (6) to a second satellite (12) of the plurality, configured as a first destination satellite with respect to the first destination receiving station (6), or which connects, in a second configuration and a third configuration, the first destination receiving station (56; 106) to the first satellite (110), configured as a first destination satellite with respect to the first destination receiving station (56; 106);
- a third radiofrequency downlink (28; 68; 128), which connects, in the first configuration, the second destination receiving station (8; 58; 108) to a third satellite (14) of the plurality, configured as a second destination satellite with respect to the second destination receiving station (8), or which connects, in the second configuration, the second destination receiving station (58) to a second satellite (62) of the plurality, configured as a second destination satellite with respect to the second destination receiving station (58), or which connects, in the third configuration, the second destination receiving station (128) to the first satellite (110), configured as a second destination satellite with respect to the second destination receiving station (108);
the first, second and third satellites (10, 12, 14) of the first configuration, or the first and second satellites (60, 62) of the second configuration being interconnected to one another by a space network (32; 72) comprising at least two or at least one inter-satellite link(s) (34, 36; 74), and the first satellite of the third configuration comprising an internal router (132);
the transparent on-board routing method being **characterised in that**:
- the origin transmitting station (4; 54; 104) segments high bit rate data streams received into coded or uncoded BBFRAME packets each having the structure of a coded or uncoded baseband frame BBFRAME as defined by the DVB-S2 protocol; and
- the origin transmitting station (4; 54; 104) inserts, for each coded or uncoded BBFRAME packet, an on-board routing label in a single piece associated with the coded or uncoded BBFRAME packet, respectively,
by including the on-board routing label in and at the start of a payload data field of the BBFRAME packet when the BBFRAME packet is uncoded, or
by externally adding the on-board routing label to the BBFRAME packet when the BBFRAME packet is coded;
the on-board routing label associated with the coded or uncoded BBFRAME packet containing an identifier of the destination receiving station associated with the coded BBFRAME packet, from among the first destination receiving station (6; 56; 106) and the second destination receiving station (8; 58; 108).

2. Method for transparent on-board routing of data packets at high bit rate according to claim 1, comprising the steps involving:
- in a first step (204), the origin transmitting station (4; 54; 104) segmenting high bit rate data streams received into uncoded BBFRAME packets of large size each having the structure of an uncoded baseband frame BBFRAME as defined by the DVB-S2 protocol and in which a data field is reserved in the header and in the payload of the uncoded BBFRAME packet in order to receive an on-board routing label in an associated single piece, containing an identifier of the destination receiving station associated with the uncoded BBFRAME packet; then
- in a second step (206), the origin transmitting station (4; 54; 104) inserting, into the routing label, an identifier of the destination receiving station associated with the uncoded BBFRAME packet, coding the completed uncoded BBFRAME packet as a coded BBFRAME packet, and transmitting the coded BBFRAME packet to the first satellite, configured as the origin satellite,
the coded BBFRAME packet transmitted being modulated by a predetermined modulation, defined according to the DVB-S2 protocol and compatible with the code used for the DVB-S2 packet; then
- in a third step (208), the first origin satellite (10; 60; 110) receiving, demodulating and decoding each coded BBFRAME packet, transmitted by the origin transmitting station in the second step (206), and extracting from the on-board routing label the information for identifying the destination receiving station in order to route, transparently using the space network, the decoded BBFRAME packet to the destination satellite corresponding to the destination receiving station of the uncoded BBFRAME packet.

3. Method for transparent on-board routing of data packets at high bit rate according to claim 2, in which
the first step (204) comprises a fourth step (236) and a fifth step (238) executed in succession,
the fourth step (236) involving the origin transmitting station segmenting high bit rate data streams received into uncoded BBFRAME packets each having the structure of a baseband frame before coding as defined in the DVB-S2 protocol;
the fifth step (238) involving the origin transmitting station switching, according to the associated destination receiving station thereof, the uncoded BBFRAME packets whose associated destination receiving stations are the first destination receiving station and/or the second destination receiving station on a first queue defining a first logical channel associated with the first destination receiving station and a second queue defining a first logical channel associated with the second destination receiving station.

4. Method for transparent on-board routing of data packets at high bit rate according to claim 1, comprising the steps involving:
- in a first step (304), the origin transmitting station (4; 54; 104) segmenting and coding high bit rate data streams received as coded BBFRAME packets each having the structure of a coded baseband frame BBFRAME as defined by the DVB-S2 protocol and having an associated destination receiving station from among the first destination receiving station and the second destination receiving station; then
- in a second step (306), the origin transmitting station (4; 54; 104) adding the on-board routing label associated with the BBFRAME packet coded and formed in the first step (304) to the coded BBFRAME packet, and transmitting the assembly formed by the coded BBFRAME packet and the associated on-board routing label thereof to the first satellite (10; 60; 110) configured as the origin satellite,
the coded BBFRAME packet and the associated label, respectively, in a single piece, transmitted in a manner grouped together, being modulated by the same modulation defined according to the DVB-S2 protocol and compatible with the code used for the coded DVB-S2 packet; then
- in a third step (308), the first origin satellite (10; 60; 110) receiving and demodulating each coded BBFRAME packet and the corresponding added label thereof transmitted by the first transmitting station in the second step, and extracting from the on-board routing label the information for identifying the destination receiving station in order to route, transparently using the space network, the coded BBFRAME packet to the destination satellite corresponding to the destination receiving station of the coded BBFRAME packet.

5. Method for transparent on-board routing of data packets at high bit rate according to claim 4, in which
the first step (304) comprises a fourth step (326) and a fifth step (328) executed in succession,
the fourth step (326) involving the origin transmitting station segmenting high bit rate data streams received into uncoded BBFRAME packets each having the structure of a baseband frame before coding as defined in the DVB-S2 protocol;
the fifth step (228) involving the origin transmitting station
either coding the uncoded BBFRAME packets as coded BBFRAME packets then switching, according to the associated destination receiving station thereof, the coded BBFRAME packets whose associated destination receiving stations are the first destination receiving station and/or the second destination receiving station on a first queue defining a first logical channel associated with the first destination receiving station and a second queue defining a first logical channel associated with the second destination receiving station,
or switching, according to the associated destination receiving station thereof, the uncoded BBFRAME packets whose associated destination receiving stations are the first destination receiving station and/or the second destination receiving station on a first queue defining a first logical channel associated with the first destination receiving station and a second queue defining a first logical channel associated with the second destination receiving station, then, at the output of each queue, coding the uncoded BBFRAME packets as coded BBFRAME packets.

6. Method for transparent on-board routing of data packets at high bit rate according to either claim 4 or claim 5, in which the on-board routing label added is coded by a coding dedicated exclusively to the label at a fixed rate, independent of the transmitting station and of the receiving stations.

7. Method for transparent on-board routing of data packets at high bit rate according to any one of claims 2 to 6, further comprising
a sixth step (414; 424), executed after the third step (208; 308), during which the first origin satellite (10; 60; 110) generates routing information for the coded or uncoded BBFRAME packet on the basis of the information for identifying the destination receiving station and predetermined signalling information concerning optimised transit paths for the data packet, which can be used within the space network between the origin satellite and the relevant destination satellite or within the internal router, and encodes it in a dedicated data field of the routing label according to a predetermined protocol, dedicated to the space network or to the internal router.

8. Method for transparent on-board routing of data packets at high bit rate according to any one of claims 1 to 7, in which the on-board routing label is or includes a label defined according to the MPLS ("Multi-Protocol Label Switching") protocol or a label defined according to the Ethernet VLAN protocol or a PLHEADER label.

9. Method for transparent on-board routing of data packets at high bit rate according to any one of claims 1 to 8, in which the on-board routing label comprises additional information included in the set formed by a first measurement of a first signal-to-noise-plus-interference ratio of the uplink from the transmitting station to the origin satellite, second measurements of second signal-to-noise-plus-interference ratios of the downlinks from the destination receiving stations to the transmitting station and numbers of a numbering system for a rescheduling.

10. Method for transparent on-board routing of data packets at high bit rate according to any one of claims 1 to 9, in which each BBFRAME packet before coding comprises one or more GSE packets defined according to the GSE protocol.

11. Method for transparent on-board routing of data packets at high bit rate according to any one of claims 1 to 10, in which
the telecommunication system further comprises at least one additional destination receiving station and one additional satellite,
the additional satellite being different from the second and third destination satellites, configured as a destination satellite with respect to the destination receiving station, and connected directly to the additional destination receiving station by an additional radiofrequency downlink from the additional destination satellite;
the first origin satellite, the second, third destination satellites and the at least one additional destination satellite being interconnected to one another by the space network; and in which
the origin transmitting station segments high bit rate data streams received into coded or uncoded BBFRAME packets, the coded or uncoded BBFRAME packets each having the structure of a coded or uncoded baseband frame BBFRAME as defined by the DVB-S2 protocol and an associated destination receiving station from among the second destination receiving station, the third destination receiving station and the at least one additional destination receiving station.

12. Satellite telecommunication system for supplying high bit rate telecommunication services comprising
- an origin transmitting station (4; 54; 104), a first destination receiving station (6; 56; 106), a second destination receiving station (8; 58; 108), and a plurality of at least one satellite(s) (10, 12, 14; 60, 62; 110); and
- a first radiofrequency uplink (24; 64; 124) which connects the origin transmitting station (4; 54; 104) to a first satellite (10; 60; 110) of the plurality, configured as an origin satellite with respect to the origin transmitting station;
- a second radiofrequency downlink (26; 66; 126) which connects, in a first configuration, the first destination receiving station (6) to a second satellite (12) of the plurality, configured as a first destination satellite with respect to the first destination receiving station (6), or which connects, in a second configuration and a third configuration, the first destination receiving station (56; 106) to the first satellite (60; 110), configured as a first destination satellite with respect to the first destination receiving station (56; 106);
- a third radiofrequency downlink (28; 68; 128) which connects, in the first configuration, the second destination receiving station (8; 58; 108) to a third satellite (14) of the plurality, configured as a second destination satellite with respect to the second destination receiving station (8), or which connects, in the second configuration, the second destination receiving station (108) to a second satellite (62) of the plurality, configured as a second destination satellite with respect to the second destination receiving station (58), or which connects, in the third configuration, the second destination receiving station (128) to the first satellite (110), configured as a second destination satellite with respect to the second destination receiving station (108);
the first, second and third satellites (10, 12, 14) of the first configuration or the first and second satellites (60, 62) of the second configuration being interconnected to one another by a space network (32; 72) comprising at least two or at least one inter-satellite link(s) (34, 36; 74), and the first satellite of the third configuration comprising an internal router (132);
the satellite telecommunication system being **characterised in that** the origin transmitting station (4; 54; 104) is configured
- in a first step, to segment and code high bit rate data streams received as coded BBFRAME packets each having the structure of a coded baseband frame BBFRAME as defined by the DVB-S2 protocol and an associated destination receiving station from among the first destination receiving station (6; 56; 106) and the second destination receiving station (8; 58; 108); then
- in a second step, to add, to the BBFRAME packet coded and formed in the first step, an associated on-board routing label, and to transmit the assembly formed by the BBFRAME packet and the associated on-board routing label thereof to the first satellite (10; 60; 110) configured as the origin satellite, the on-board routing label associated with the coded BBFRAME packet containing an identifier of the destination receiving station associated with the coded BBFRAME packet, and the coded BBFRAME packet and the associated on-board routing label, respectively, in a single piece, transmitted in a manner grouped together, being modulated by the same modulation defined according to the DVB-S2 protocol and compatible with the code used for the DVB-S2 packet; and
the first origin satellite (10; 60; 110) is configured
in a third step, to receive and demodulate each coded BBFRAME packet and the corresponding added routing label thereof, transmitted by the origin transmitting station in the second step, and to extract from the on-board routing label the information for identifying the destination receiving station in order to route, transparently using the space network, the coded BBFRAME packet to the destination satellite corresponding to the destination receiving station of the coded BBFRAME packet.

13. Satellite telecommunication system according to claim 12, in which the first origin transmitting station (4; 54; 104) is configured
- in a fourth step included in the first step, to segment the high bit rate data streams received into uncoded BBFRAME packets each having the structure of a baseband frame before coding as defined in the DVB-S2 protocol; then
- in a fifth step, following the fourth step,
either to code the uncoded BBFRAME packets as coded BBFRAME packets then to switch, according to the associated destination receiving station thereof, the coded BBFRAME packets whose associated destination receiving stations are the first destination receiving station and/or the second destination receiving station, on a first queue defining a first logical channel associated with the first destination receiving station and a second queue defining a first logical channel associated with the second destination receiving station,
or to switch, according to the associated destination receiving station thereof, the uncoded BBFRAME packets whose associated destination receiving stations are the first destination receiving station and/or the second destination receiving station on a first queue defining a first logical channel associated with the first destination receiving station and a second queue defining a first logical channel associated with the second destination receiving station, then, at the output of each queue, to code the uncoded BBFRAME packets as coded BBFRAME packets.

14. Satellite telecommunication system for supplying high bit rate telecommunication services, comprising
- an origin transmitting station (4; 54; 104), a first destination receiving station (6; 56; 106), a second destination receiving station (8; 58; 108), and a plurality of at least one satellite(s) (10, 12, 14; 60, 62; 110); and
- a first radiofrequency uplink (24; 64; 124) which connects the origin transmitting station (4; 54; 104) to a first satellite (10; 60; 110) of the plurality, configured as an origin satellite with respect to the origin transmitting station;
- a second radiofrequency downlink (26; 66; 126) which connects, in a first configuration, the first destination receiving station (6) to a second satellite (12) of the plurality, configured as a first destination satellite with respect to the first destination receiving station (6), or which connects, in a second configuration and a third configuration, the first destination receiving station (56; 106) to the first satellite (60; 110), configured as a first destination satellite with respect to the first destination receiving station (56; 106);
- a third radiofrequency downlink (28; 68; 128) which connects, in the first configuration, the second destination receiving station (8; 58; 108) to a third satellite (14) of the plurality, configured as a second destination satellite with respect to the second destination receiving station (8), or which connects, in the second configuration, the second destination receiving station (108) to a second satellite (62) of the plurality, configured as a second destination satellite with respect to the second destination receiving station (58), or which connects, in the third configuration, the second destination receiving station (128) to the first satellite (110), configured as a second destination satellite with respect to the second destination receiving station (108);
the first, second and third satellites (10, 12, 14) of the first configuration or the first and second satellites (60, 62) of the second configuration being interconnected to one another by a space network (32; 72) comprising at least two or at least one inter-satellite link(s) (34, 36; 74), and the first satellite of the third configuration comprising an internal router (132);
the satellite telecommunication system being **characterised in that**
- the origin transmitting station (4; 54; 104) is configured, in a first step, to segment high bit rate data streams received into uncoded BBFRAME packets of large size each having the structure of an uncoded baseband frame BBFRAME as defined by the DVB-S2 protocol and in which a data field is reserved in the header and in the payload of the uncoded BBFRAME packet in order to receive an on-board routing label in an associated single piece, containing an identifier of the destination receiving station associated with the uncoded BBFRAME packet; and
- the origin transmitting station (4; 54; 104) is configured, in a second step, to insert, into the on-board routing label, an identifier of the destination receiving station associated with the uncoded BBFRAME packet, to code the completed uncoded BBFRAME packet as a coded BBFRAME packet, and to transmit the coded BBFRAME packet to the first satellite, configured as the origin satellite,
the coded BBFRAME packet transmitted being modulated by a predetermined modulation, defined according to the DVB-S2 protocol and compatible with the code used for the DVB-S2 packet; and
- the first origin satellite (10; 60; 110) is configured, in a third step, to receive, demodulate and decode each coded BBFRAME packet, transmitted by the origin transmitting station in the second step, and to extract from the on-board routing label the information for identifying the destination receiving station in order to route, transparently using the space network, the decoded BBFRAME packet to the destination satellite corresponding to the destination receiving station of the uncoded BBFRAME packet.

15. Satellite telecommunication system according to claim 14, in which
the origin transmitting station (4; 54; 104) is configured, in a fourth step included in the first step, to segment high bit rate data streams received into uncoded BBFRAME packets each having the structure of a baseband frame before coding as defined in the DVB-S2 protocol; and
the origin transmitting station (4; 54; 104) is configured, in a fifth step following the fourth step, to switch, according to their associated destination receiving station, the uncoded BBFRAME packets whose associated destination receiving stations are the first destination receiving station and/or the second destination receiving station on a first queue defining a first logical channel associated with the first destination receiving station and a second queue defining a first logical channel associated with the second destination receiving station.

16. Computer product or program comprising a set of instructions, configured to implement the transparent routing method defined according to any one of claims 1 to 11, when they are loaded into and executed by one or more computers implemented in the telecommunication system, defined according to any one of claims 12 to 15.
